# EUROPEAN PATENT SPECIFICATION

(11) **EP 3 243 352 B1**
(45) Date of publication and mention of the grant of the patent: **02.05.2018**
(21) Application number: 15750363.2
(22) Date of filing: 07.08.2015
(51) Int. Cl.: H04W 72/04

(54) **CONFLICT INDICATION FOR RADIO TRANSMISSION CONTROL BY MULTIPLE DEVICES**
KONFLIKTANZEIGE ZUR FUNKÜBERTRAGUNGSSTEUERUNG ÜBER MEHRERE VORRICHTUNGEN
INDICATION DE CONFLIT POUR UNE COMMANDE DE TRANSMISSION RADIO PAR MULTIPLES DISPOSITIFS

(43) Date of publication of application: 15.11.2017
(73) Proprietor: Telefonaktiebolaget LM Ericsson (publ), 164 83 Stockholm (SE)
(72) Inventor: HESSLER, Martin, S-587 58 Linkoeping (SE); ERIKSSON, Erik, S-585 93 Linkoeping (SE); YILMAZ, Osman Nuri Can, FI-02280 Espoo (FI)
(74) Representative: Ericsson
(86) International application number: PCT/EP2015/068244
(87) International publication number: WO 2017/025113

(56) References cited:
- EP-A1- 2 716 122
- WO-A1-2014/126255
- WO-A1-2015/020605

## Description

### Technical Field

The present invention relates to methods for controlling radio transmission and to corresponding devices.

### Background

In current radio technologies, such as the LTE (Long Term Evolution) cellular radio technology specified by 3GPP (3^{rd} Generation Partnership Project), it is known to control a user equipment (UE) by an exclusive control chain with well-defined control responsibilities. For example, in the LTE radio technology typically one base station, referred to as eNB (evolved Node B) controls radio transmission by a certain UE. As defined in 3GPP TS 36.213 V12.5.0 (2015-03), the eNB may for example utilize downlink control information (DCI) transmitted on the PDCCH (Physical Downlink Control Channel) to indicate allocated radio resources to the UE or to convey a transmit power control (TPC) command to the UE. In these cases the UE provides no explicit feedback to the received control information. Rather, the eNB may infer from the behavior of the UE that the control information was received and successfully applied by the UE. For example, if the DCI transmitted by the eNB indicates radio resources for an uplink (UL) radio transmission by the UE, the eNB may conclude that the DCI was correctly received by the UE if it receives an UL radio transmission from the UE on these radio resources. Similarly, if the DCI transmitted by the eNB indicates radio resources for a downlink (DL) radio transmission to the UE, the eNB may conclude that the DCI was correctly received by the UE if it receives acknowledgement for the DL radio transmission on these radio resources from the UE. Further, if the DCI transmitted by the eNB includes a TPC, the eNB may conclude that the DCI was correctly received by the UE if the UE adjusts its transmit power in a corresponding manner.

However, with evolution of such radio technologies, also scenarios may occur in which the above-mentioned exclusiveness of the control chain is less strict. Examples of such scenarios include dual connectivity scenarios in which the UE is simultaneously connected to two base stations or device-to-device communication scenarios in which two UEs establish a direct radio connection using a device-to-device communication mode of the underlying cellular radio technology. It may then occur that two different devices send conflicting control information to the UE, which means that the UE may not react as expected by the device sending the control information.
WO 2015/020605 A1 discloses embodiments which relate to a method performed by a first wireless network access point, for allocating uplink or downlink resources, to a mobile terminal that is configured for dual connectivity, wherein the mobile terminal supports two or more contemporaneous links with two or more wireless network access points comprising the first wireless network access point and a second wireless network access point. The first wireless network access point receives, from the second wireless network access point, resource allocation information for the mobile terminal being in a dual connectivity mode. The first wireless network access point determines a resource allocation relating to the first wireless network access point based on the received resource allocation information received from the second wireless network access point. The first wireless network access point sends, to the mobile terminal, a resource allocation message indicating the determined resource allocation relating to the first wireless network access point.
EP 2716122 A1 discloses measures for channel access control. Such measures may exemplarily comprise obtaining a contention window assignment including at least an assignment of a size of a contention window for contention-based channel access, accessing at least one logical channel in a contention-based manner according to the contention window assignment, including allocating resources to the at least one logical channel for data transmission, and modifying the size of the contention window based on a result of the resource allocation in terms of an aggregated bit rate allocated for data transmission and an aggregate target bit rate requirement of prioritized bit rates of the at least one logical channel.
Accordingly, there is a need for techniques which allow for efficiently controlling radio transmissions in scenarios where multiple devices transmit control information to the same radio device.

### Summary

The invention is set out in the appended set of claims. The embodiments and/or examples of the following description which are not covered by the appended claims are considered as not being part of the present invention. According to an embodiment, a method of controlling radio transmission is provided. According to the method, a radio device receives first control information from a device. Further, the radio device receives second control information from another device. In response to detecting a conflict of an operation associated with the first control information and an operation associated with the second control information, the radio device selects between initiating the operation associated with the first control information and initiating the operation associated with the second control information, and sends an indication of the conflict to at least one of the device and the other device.

According to a further embodiment, a method of controlling radio transmission is provided. According to the method, a device sends first control information to a radio device. The device performs a first operation in response to detecting that the radio device performed an operation associated with the first control information. Further, the device performs a second operation in response to receiving an indication of a conflict of the operation associated with the first control information and an operation associated with second control information received by the radio device from another device.

According to a further embodiment, a radio device is provided. The radio device is configured to receive first control information from a device. Further, the radio device is configured to receive second control information from another device. Further, the radio device is configured to, in response to detecting a conflict of an operation associated with the first control information and an operation associated with the second control information, select between initiating the operation associated with the first control information and initiating the operation associated with the second control information, and send an indication of the conflict to at least one of the device and the other device. The radio device may for example comprise one or more interfaces to the device and to the other device. Via this interface or these interfaces, the first control information and the second control information may be received and/or the indication of the conflict be sent. Further, the radio device may comprise at least one processor which is configured to execute or control the above-mentioned receiving of the first control information and of the second control information, detecting of the conflict, selecting between initiating the operation associated with the first control information and initiating the operation associated with the second control information, and sending the indication of the conflict.

According to a further embodiment, a device for controlling a radio device is provided. The device is configured to send first control information to the radio device. Further, the device is configured to perform a first operation in response to detecting that the radio device performed an operation associated with the first control information. Further, the device is configured to perform a second operation in response to receiving an indication of a conflict of the operation associated with the first control information and an operation associated with second control information received by the radio device from another device. The device may for example comprise an interface to the radio device. Via this interface, the first control information may be sent and/or the indication of the conflict be received. Further, the device may comprise at least one processor which is configured to execute or control the above-mentioned sending of the first control information, performing of the first operation and performing of the second operation.

According to a further embodiment, a computer program or computer program product is provided, e.g., in the form of a non-transitory storage medium, which comprises program code to be executed by at least one processor of a radio device. Execution of the program code by the at least one processor causes the radio device to receive first control information from a device. Further, execution of the program code by the at least one processor causes the radio device to receive second control information from another device. Further, execution of the program code by the at least one processor causes the radio device to, in response to detecting a conflict of an operation associated with the first control information and an operation associated with the second control information, select between initiating the operation associated with the first control information and initiating the operation associated with the second control information, and send an indication of the conflict to at least one of the device and the other device.

According to a further embodiment, a computer program or computer program product is provided, e.g., in the form of a non-transitory storage medium, which comprises program code to be executed by at least one processor of a device for controlling a radio device. Execution of the program code by the at least one processor causes the device to send first control information to the radio device. Further, execution of the program code by the at least one processor causes the device to perform a first operation in response to detecting that the radio device performed an operation associated with the first control information. Further, execution of the program code by the at least one processor causes the device to perform a second operation in response to receiving an indication of a conflict of the operation associated with the first control information and an operation associated with second control information received by the radio device from another device.

Details of such embodiments and further embodiments will be apparent from the following detailed description of embodiments.

### Brief Description of the Drawings

Fig. 1 schematically illustrates an exemplary scenario of utilizing a conflict indication according to an embodiment.
Fig. 2 schematically illustrates a further exemplary scenario of utilizing a conflict indication according to an embodiment.
Fig. 3 illustrates an example of processes according to an embodiment, in which a conflict is reported to at least one device sending control information.
Fig. 4 illustrates a further example of processes according to an embodiment, in which a conflict is reported to at least one device sending a resource assignment and causes reassignment of resources by this device.
Fig. 5 illustrates a further example of processes according to an embodiment, in which reporting of a conflict to at least one device sending control information is triggered depending on a reporting criterion.
Fig. 6 illustrates a further example of processes according to an embodiment, in which a report of a conflict is forwarded from one device sending control information to another device sending control information.
Fig. 7 illustrates a further example of processes according to an embodiment, in which selection of an operation performed by a radio device depends on priorities associated with control information received from different devices.
Fig. 8 shows a flowchart for illustrating a method according to an embodiment, which may be implemented by a radio device.
Fig. 9 shows a flowchart for illustrating a further method according to an embodiment, which may be implemented by a device controlling a radio device.
Fig. 10 schematically illustrates structures of a radio device according to an embodiment.
Fig. 11 schematically illustrates structures of a control device according to an embodiment.

### Detailed Description of Embodiments

In the following, concepts in accordance with exemplary embodiments of the invention will be explained in more detail and with reference to the accompanying drawings. The illustrated embodiments relate to concepts for controlling radio transmission, e.g., in a cellular network. The embodiments specifically refer to a scenario based on utilizing the LTE cellular radio technology. However, it should be understood that the concepts could also be applied in connection with other radio technologies, e.g., future evolutions of the LTE cellular radio technology, e.g., a 5G (5^{th} Generation) cellular radio technology.

In the illustrated concepts, it is assumed that multiple devices may send control information to a radio device, and that there may be conflicts between operations associated with such control information from different devices. Typically, this is due to the radio device not being capable of simultaneously meeting requirements associated with these operations. Such requirements may relate to specifications in a standard, to power considerations, to computational limitations or other processing limitations, or to signal processing limitations, e.g., with respect to beam-forming. By way of example, first control information received from a first device could assign radio resources to a certain utilization, e.g., to UL transmissions from the radio device to the cellular network or DL transmissions from the cellular network to the radio device, an a second device could assign at least a part of these radio resources to another utilization which is in conflict with these UL or DL transmissions, e.g., to direct device-to-device communication. Further, assignments of radio resources may also cause conflicts in the case of non-overlapping radio resources, e.g., if the assignments require utilization of the same processing resources of the radio device, such as parts of the same transmit processing chain or parts of the same receive processing chain. Further, conflicts could also arise in the case of other kinds of assignment of processing resources of the radio device to conflicting utilizations or in the case of TPC commands causing differing transmit power adjustments.

According to the illustrated concepts, such conflicts are detected by the radio device, and the radio device decides between the items of conflicting control information, i.e., selects one control information and initiates an operation associated therewith. This may for example involve utilizing radio resources or processing resources as assigned by the control information or controlling the transmit power according to a TPC command received with the control information. The other control information may be discarded, i.e., not applied. The selection may also be performed with the aim of minimizing the amount of control information which is discarded. This selection by the radio device, which may be based on priorities associated with the control information, allows for resolving the conflict at the radio device. Further, to avoid problems at the devices sending the control information, the radio device sends an indication of the detected conflict to at least one of these devices. In this way, the devices sending the conflicting control information may be informed about the conflict and adjust their behavior accordingly. Specifically, when the control information sent by one device is discarded, this device may be informed to not expect that the radio device performs an operation associated with the discarded control information. The control information may correspond to physical layer control information which is transmitted without requiring direct acknowledgement or feedback from the radio device, such as UL or DL radio resource assignments or TPC commands transmitted in DCI on a PDCCH of the LTE cellular radio technology. Also the indication of the conflict may be transmitted as part of physical layer control information, e.g., on a PUCCH (Physical Uplink Control Channel) of the LTE cellular radio technology or similar control channel, e.g., an UL control channel of a 5G cellular radio technology or a control channel established between devices performing device-to-device communication. However, it is to be understood that the illustrated concepts could also be applied on other protocol layers and/or in connection with other kinds of control information.

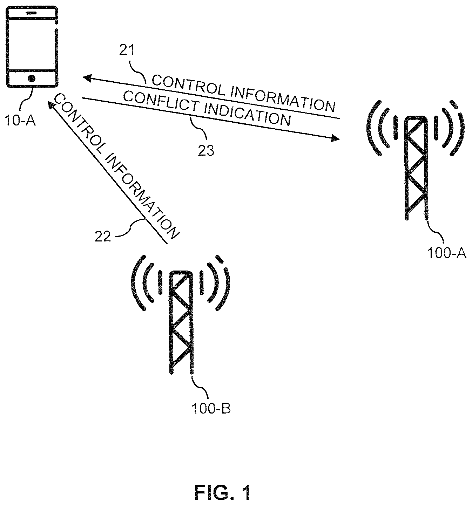

Figs. 1 shows an exemplary scenario in which the concepts as outlined above may be applied. The scenario of Fig. 1 involves a UE 10-A and base stations 100-A and 100-B (e.g., eNBs as specified for the LTE radio technology). In the illustrated scenario, the UE 10-A maintains a radio link to the base station 100-A and to the base station 100-B. For example, the UE 10-A could be configured for performing radio transmissions simultaneously on both the radio link to the base station 100-A and on the radio link to the base station 100-B, e.g., utilizing a link aggregation mode or a dual-connectivity mode.

In the scenario of Fig. 1, the base station 100-A sends first control information 21 to the UE 10-A, and the base station 100-B sends second control information 22 to the UE 10-A. Each of the first control information 21 and the second control information 22 may for example include an assignment of radio resources to the UE 10-A, an assignment of processing resources of the UE 10-A to a certain utilization, or a TPC command. In the scenario of Fig. 1 it is assumed that the first control information 21 and the second control information 22 are conflicting, which means that the UE 10-A is not capable of performing both an operation associated with the first control information 21 and an operation associated with the second control information 22. The UE 10-A detects the conflict and makes a selection which operation to perform and discards the other control information, e.g., based on configured priorities and/or based on priorities dynamically signaled together with the first control information 21 and the second control information. In response to this selection, the UE 10-A indicates the detected conflict to at least one of the base stations 100-A, 100-B. As illustrated in Fig. 1, the UE 10-A may for example select to perform the operation associated with the second control information 22 and indicate the conflict by sending a conflict report 23 to the base station 100-A. From the conflict report 23, the base station 100-A may then conclude that the UE 10-A discarded the first control information 21 and adjust its operation accordingly.

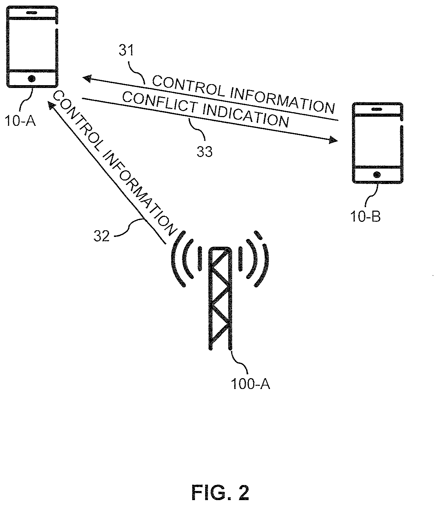

Figs. 2 shows a further exemplary scenario in which the concepts as outlined above may be applied. The scenario of Fig. 2 involves a UE 10-A, a further UE 10-B, and a base station 100-A (e.g., an eNB as specified for the LTE radio technology). In the illustrated scenario, the UE 10-A maintains a radio link to the base station 100-A and a further radio link to the UE 10-B. The radio link to the UE 10-B may for example be based on a device-to-device communication mode of the underlying cellular radio technology, in which the communicating UEs each have certain control responsibilities with respect to the utilized radio link. In the scenario of Fig. 2, the UE 10-A can thus be configured for performing radio transmissions simultaneously on both the radio link to the base station 100-A and on the device-to-device communication radio link to the UE 10-B.

In the scenario of Fig. 2, the base station 100-A sends first control information 31 to the UE 10-A, and the UE 10-B sends second control information 32 to the UE 10-A. Each of the first control information 31 and the second control information 32 may for example include an assignment of radio resources to the UE 10-A, an assignment of processing resources of the UE 10-A to a certain utilization, or a TPC command. In the scenario of Fig. 2 it is assumed that the first control information 31 and the second control information 32 are conflicting, which means that the UE 10-A is not capable of performing both an operation associated with the first control information 31 and an operation associated with the second control information 32. The UE 10-A detects the conflict and makes a selection which operation to perform and discards the other control information, e.g., based on configured priorities and/or based on priorities dynamically signaled together with the first control information 31 and the second control information. In response to this selection, the UE 10-A indicates the detected conflict to at least one of the base station 100-A and the UE 10-B. As illustrated in Fig. 2, the UE 10-A may for example select to perform the operation associated with the second control information 32 and indicate the conflict by sending a conflict report 33 to the UE 10-B. From the conflict report 23, the UE 10-B may then conclude that the UE 10-A discarded the first control information 31 and adjust its operation accordingly.

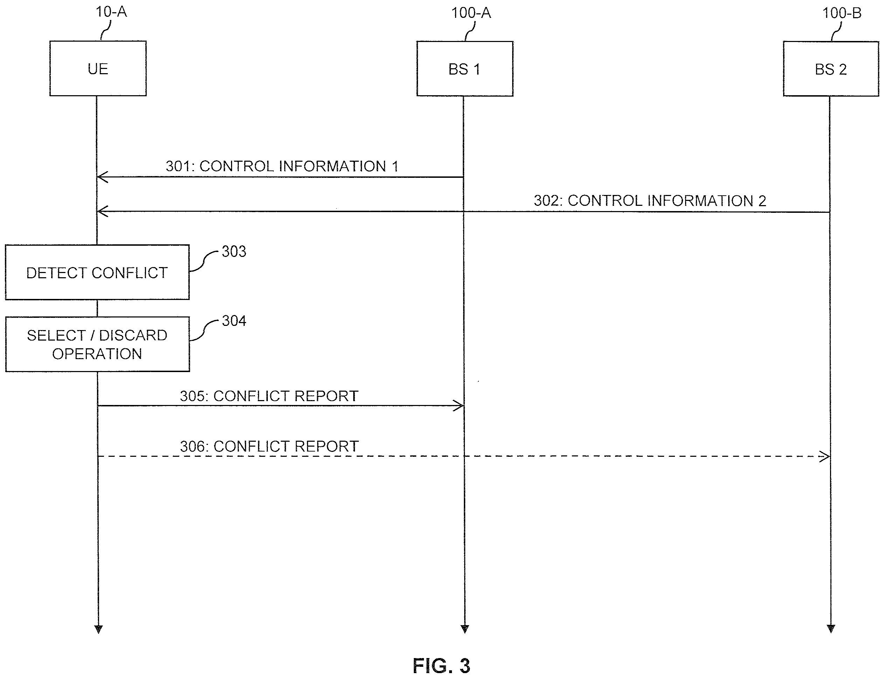

Fig. 3 shows an example of processes which involve handling of a conflict of control information received from different devices based on the concepts as outlined above. The processes of Fig. 3 involve a UE 10-A, a first base station (BS 1) 100-A, and a second base station (BS 2) 100-B, e.g., as illustrated in Fig. 1. However, it is to be understood that similar processes could also be applied when replacing at least one of the base station 100-A and the base station 100-B with an additional UE, e.g., in a scenario as illustrated in Fig. 2.

As illustrated, the first base station 100-A sends first control information 301 to the UE 10-A. The first control information 301 may for example include an assignment of radio resources to the UE 10-A, an assignment of processing resources of the UE 10-A to a certain utilization, and/or a TPC command. The first control information 301 may be part of physical layer control information, e.g., be conveyed in DCI on a PDCCH of the first base station 100-A.

As further illustrated, the second base station 100-B sends second control information 302 to the UE 10-A. The second control information 302 may for example include an assignment of radio resources to the UE 10-A, an assignment of processing resources of the UE 10-A to a certain utilization, and/or a TPC command. The second control information 302 may be part of physical layer control information, e.g., be conveyed in DCI on a PDCCH of the second base station 100-B.

At 303, the UE 10-A detects a conflict of the first control information 301 and the second control information 302. For example, this conflict may be due to the first control information 301 and the second control information 302 assigning at least partially overlapping radio resources to different utilizations, the first control information 301 and the second control information 302 assigning processing resources of the UE 10-A to different utilizations, and/or the first control information 301 and the second control information 302 including TPC commands aiming at different transmit power adjustments. The UE 10-A may detect such conflict by analyzing the received control information 301, 302 before applying the control information 301, 302.

At 304, the UE 10-A selects between initiating an operation associated with the first control information 301 and initiating an operation associated with the second control information 302. For example, if the first control information 301 includes an assignment of radio resources, the operation associated with the first control information 301 may involve sending or receiving data on the assigned radio resources. Further, if the first control information 301 includes an assignment of processing resources of the UE 10-A to a certain utilization, the operation associated with the first control information 301 may involve utilizing the assigned processing resources in a corresponding manner. Further, if the first control information 301 includes a TPC command, the operation associated with the first control information 301 may involve adjusting the transmit power of the UE 10-A as indicated by the TPC command. Similarly, if the second control information 302 includes an assignment of radio resources, the operation associated with the second control information 302 may involve sending or receiving data on the assigned radio resources. Further, if the second control information 302 includes an assignment of processing resources of the UE 10-A to a certain utilization, the operation associated with the second control information 302 may involve utilizing the assigned processing resources in a corresponding manner. Further, if the second control information 302 includes a TPC command, the operation associated with the second control information 302 may involve adjusting the transmit power of the UE 10-A as indicated by the TPC command.

The UE 10-A may perform the selection on the basis of priorities configured in the UE 10-A before receiving the first control information 301 and the second control information 302, e.g., based on higher layer control signaling or based on default settings defined by an operator of the cellular radio network or by a device manufacturer of the UE 10-A. In addition or as an alternative, the selection may also be based on a priority dynamically signaled together with at least one of the first control information 301 and the second control information 302. For example, such dynamically signaled priority could override a pre-configured priority configured based on default settings.

When selecting one of the operation associated with the first control information 301 and the operation associated with the second control information 302, the UE 10-A may at the same time discard at least a part of the control information 301, 302 associated with the operation which was not selected. However, in some cases it can also be possible for the UE 10-A to utilize some part of this control information 301, 302, e.g., a part of the control information 301, 302 which is associated with a non-conflicting operation.

As further illustrated, the UE 10-A then indicates the detected conflict to at least one of the base stations 100-A, 100-B. In the example of Fig. 3, this is accomplished by sending a conflict report 305 to the base station 100-A. The conflict report 305 may be part of physical layer control information, e.g., be conveyed on a PUCCH of the first base station 100-A. As further illustrated, the UE 10-A may alternatively or additionally also send a conflict report 306 to the base station 100-B. The conflict report 306 may be part of physical layer control information, e.g., be conveyed on a PUCCH of the second base station 100-B. In some scenarios, it can be beneficial, e.g., in view of resource efficiency, to indicate the conflict to only that base station 100-A, 100-B which transmitted the control information 301, 302 for which the associated operation was not selected by the UE 10-A. The base stations 100-A, 100-B could then assume that the transmitted control information 301, 302 was correctly applied by the UE 10-A unless receiving a conflict report 305, 306 from the UE 10-A.

The conflict report 305, 306 may for example include information which allows for identifying the conflicting control information 301, 302, e.g., in terms of time or frequency resources to which a conflicting assignment of radio resources relates. In some scenarios, the conflict report 305, 306 could also indicate multiple conflicts in an aggregated manner.

Depending on the received conflict report 305, 306 or depending on whether a conflict report 305, 306 was received for the transmitted control information, the base stations 100-A, 100-B may adjust their further operation. For example, if no conflict report 305, 306 was received for the transmitted control information 301, 302, the base station 100-A, 100-B may assume that the transmitted control information 301, 302 was correctly applied by the UE 10-A. Based on this assumption, the base station 100-A, 100-B may for example receive data from the UE 10-A or transmit data to the UE 10-A. Further, the base station 100-A, 100-B may also base various control operations on this assumption. For example, the base station 100-A, 100-B may assign of radio resources to the UE 10-A based on detecting that the UE 10-A performed the operation associated with the transmitted control information 301, 302, may estimate a service quality based on detecting that the UE 10-A performed the operation associated with the transmitted control information 301, 302, may perform link adaptation based on detecting that the UE 10-A performed the operation associated with the transmitted control information 301, 302, or may reconfigure of the UE 10-A based on detecting that the UE 10-A performed the operation associated with the transmitted control information 301, 302. On the other hand, of the conflict report 305, 306 was received by the base station 100-A, 100-B, the base station 100-A, 100-B may consider in its further operation that the UE 10-A will not perform the operation associated with the transmitted control information 301, 302. This assumption may again be applied when assigning radio resources to the UE 10-A, when estimating the service quality, when performing link adaption, or when reconfiguring the UE 10-A.

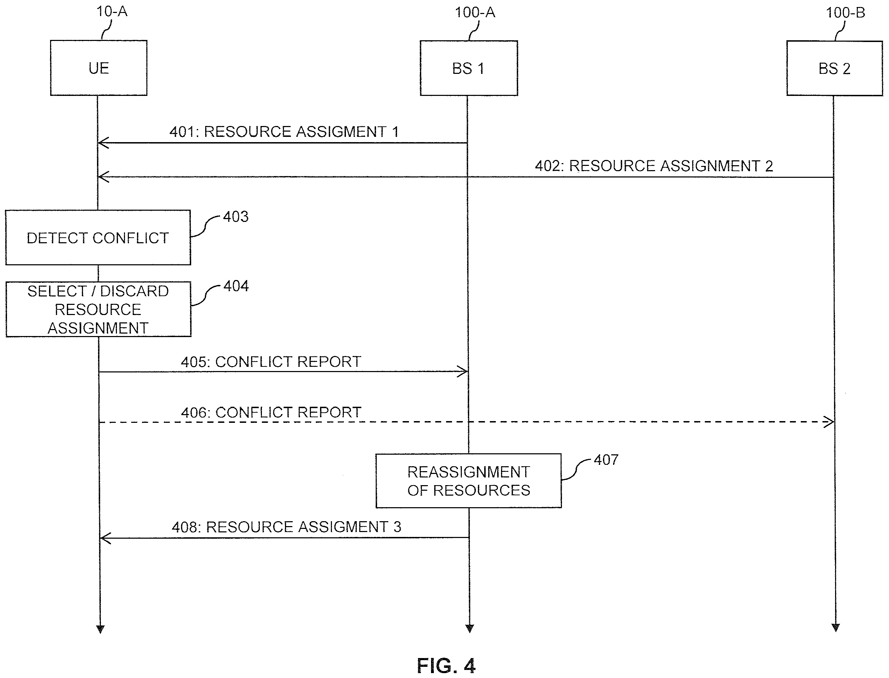

In some scenarios, if the transmitted control information includes an assignment of radio resources or processing resources, reception of the conflict report may also trigger reassignment of the assigned radio resources or processing resources. A corresponding example is illustrated by the processes of Fig. 4.

The processes of Fig. 4 involve a UE 10-A, a first base station (BS 1) 100-A, and a second base station (BS 2) 100-B, e.g., as illustrated in Fig. 1. However, it is to be understood that similar processes could also be applied when replacing at least one of the base station 100-A and the base station 100-B with an additional UE, e.g., in a scenario as illustrated in Fig. 2.

As illustrated, the first base station 100-A sends a first assignment 401 to the UE 10-A. The first assignment 401 may for example include an assignment of radio resources to the UE 10-A or an assignment of processing resources of the UE 10-A to a certain utilization. The first assignment 401 may be part of physical layer control information, e.g., be conveyed in DCI on a PDCCH of the first base station 100-A.

As further illustrated, the second base station 100-B sends a second assignment 402 to the UE 10-A. The second assignment 402 may for example include an assignment of radio resources to the UE 10-A or an assignment of processing resources of the UE 10-A to a certain utilization. The second assignment 402 may be part of physical layer control information, e.g., be conveyed in DCI on a PDCCH of the second base station 100-B.

At 403, the UE 10-A detects a conflict of the first assignment 401 and the second assignment 402. For example, this conflict may be due to the first assignment 401 and the second assignment 402 assigning at least partially overlapping radio resources to different utilizations or the first assignment 401 and the second assignment 402 assigning processing resources of the UE 10-A to different utilizations. The UE 10-A may detect such conflict by analyzing the received assignments 401, 402 before execution further operations based on any of these assignments 401, 402.

At 404, the UE 10-A selects between initiating an operation associated with the first assignment 401 and initiating an operation associated with the second assignments 402. For example, if the first assignment 401 includes an assignment of radio resources, the operation associated with the first assignment 401 may involve sending or receiving data on the assigned radio resources. Further, if the first assignments 401 includes an assignment of processing resources of the UE 10-A to a certain utilization, the operation associated with the first assignment 401 may involve utilizing the assigned processing resources in a corresponding manner. Similarly, if the second assignments 402 includes an assignment of radio resources, the operation associated with the second assignment 402 may involve sending or receiving data on the assigned radio resources. Further, if the second assignment 402 includes an assignment of processing resources of the UE 10-A to a certain utilization, the operation associated with the second assignment 402 may involve utilizing the assigned processing resources in a corresponding manner.

The UE 10-A may perform the selection on the basis of priorities configured in the UE 10-A before receiving the first assignment 401 and the second assignment 402, e.g., based on higher layer control signaling or based on default settings defined by an operator of the cellular radio network or by a device manufacturer of the UE 10-A. In addition or as an alternative, the selection may also be based on a priority dynamically signaled together with at least one of the first assignment 401 and the second assignment 402. For example, such dynamically signaled priority could override a pre-configured priority configured based on default settings.

When selecting one of the operation associated with the first assignment 401 and the operation associated with the second assignment 402, the UE 10-A may at the same time discard at least a part of the assignment 401, 402 associated with the operation which was not selected. However, in some cases it can also be possible for the UE 10-A to utilize some part of this assignment 401, 402, e.g., a part of the assigned radio resources which is not overlapping the radio resources of the other assignment 401, 402 or processing resources which are affected by only one of the assignments 401, 402.

As further illustrated, the UE 10-A then indicates the detected conflict to at least one of the base stations 100-A, 100-B. In the example of Fig. 4, this is accomplished by sending a conflict report 405 to the base station 100-A. The conflict report 405 may be part of physical layer control information, e.g., be conveyed on a PUCCH of the first base station 100-A. As further illustrated, the UE 10-A may alternatively or additionally also send a conflict report 406 to the base station 100-B. The conflict report 406 may be part of physical layer control information, e.g., be conveyed on a PUCCH of the second base station 100-B. In some scenarios, it can be beneficial, e.g., in view of resource efficiency, to indicate the conflict to only that base station 100-A, 100-B which transmitted the control information 401, 402 for which the associated operation was not selected by the UE 10-A. The conflict report 405, 406 may for example include information which allows for identifying the conflicting part of the assignment 401, 402, e.g., in terms of time or frequency resources.

In the example of Fig. 4, the base station 100-A reacts to the conflict report 405 by reassigning at least a part of the resources which were previously assigned by the assignment 401, as indicated at 407. For example, the base station 100-A may reassign these resources in such a way that the indicated conflict is avoided. In the example of Fig. 4, the base station 100-A sends a correspondingly determined new assignment 408 to the UE 10-A.

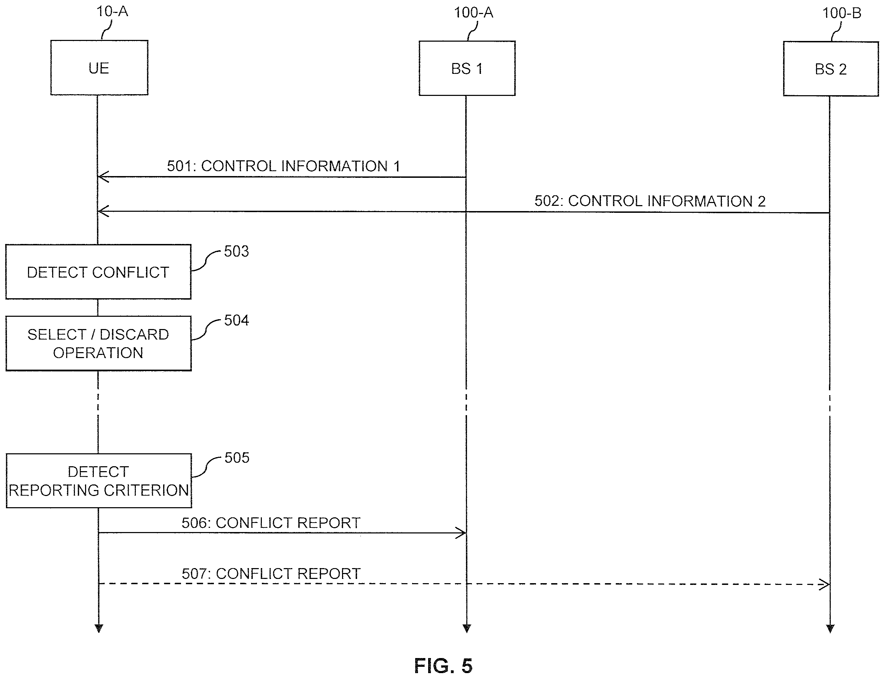

In the examples of Figs. 3 and 4, indication of the conflict is triggered by the selection between the operations associated with the control information received from the different base stations 100-A, 100-B. In this way, it becomes possible to immediately inform the base stations 100-A, 100-B about the conflict. However, in some scenarios the conflict can also be indicated at a later stage. For example, the indication of the conflict may be triggered depending on one or more further reporting criteria. An example of corresponding processes is illustrated in Fig. 5.

The processes of Fig. 5 involve a UE 10-A, a first base station (BS 1) 100-A, and a second base station (BS 2) 100-B, e.g., as illustrated in Fig. 1. However, it is to be understood that similar processes could also be applied when replacing at least one of the base station 100-A and the base station 100-B with an additional UE, e.g., in a scenario as illustrated in Fig. 2.

As illustrated, the first base station 100-A sends first control information 501 to the UE 10-A. The first control information 501 may for example include an assignment of radio resources to the UE 10-A, an assignment of processing resources of the UE 10-A to a certain utilization, and/or a TPC command. The first control information 501 may be part of physical layer control information, e.g., be conveyed in DCI on a PDCCH of the first base station 100-A.

As further illustrated, the second base station 100-B sends second control information 502 to the UE 10-A. The second control information 502 may for example include an assignment of radio resources to the UE 10-A, an assignment of processing resources of the UE 10-A to a certain utilization, and/or a TPC command. The second control information 502 may be part of physical layer control information, e.g., be conveyed in DCI on a PDCCH of the second base station 100-B.

At 503, the UE 10-A detects a conflict of the first control information 501 and the second control information 502. For example, this conflict may be due to the first control information 501 and the second control information 502 assigning at least partially overlapping radio resources to different utilizations, the first control information 501 and the second control information 502 assigning processing resources of the UE 10-A to different utilizations, and/or the first control information 501 and the second control information 502 including TPC commands aiming at different transmit power adjustments. The UE 10-A may detect such conflict by analyzing the received control information 501, 502 before applying the control information 501, 502.

At 504, the UE 10-A selects between initiating an operation associated with the first control information 501 and initiating an operation associated with the second control information 502. For example, if the first control information 501 includes an assignment of radio resources, the operation associated with the first control information 501 may involve sending or receiving data on the assigned radio resources. Further, if the first control information 501 includes an assignment of processing resources of the UE 10-A to a certain utilization, the operation associated with the first control information 501 may involve utilizing the assigned processing resources in a corresponding manner. Further, if the first control information 501 includes a TPC command, the operation associated with the first control information 501 may involve adjusting the transmit power of the UE 10-A as indicated by the TPC command. Similarly, if the second control information 502 includes an assignment of radio resources, the operation associated with the second control information 502 may involve sending or receiving data on the assigned radio resources. Further, if the second control information 502 includes an assignment of processing resources of the UE 10-A to a certain utilization, the operation associated with the second control information 502 may involve utilizing the assigned processing resources in a corresponding manner. Further, if the second control information 502 includes a TPC command, the operation associated with the second control information 502 may involve adjusting the transmit power of the UE 10-A as indicated by the TPC command.

The UE 10-A may perform the selection on the basis of priorities configured in the UE 10-A before receiving the first control information 501 and the second control information 502, e.g., based on higher layer control signaling or based on default settings defined by an operator of the cellular radio network or by a device manufacturer of the UE 10-A. In addition or as an alternative, the selection may also be based on a priority dynamically signaled together with at least one of the first control information 501 and the second control information 502. For example, such dynamically signaled priority could override a pre-configured priority configured based on default settings.

When selecting one of the operation associated with the first control information 501 and the operation associated with the second control information 502, the UE 10-A may at the same time discard at least a part of the control information 501, 502 associated with the operation which was not selected. However, in some cases it can also be possible for the UE 10-A to utilize some part of this control information 501, 502, e.g., a part of the control information 501, 502 which is associated with a non-conflicting operation.

After the selection of 504, the UE 10-A does not immediately indicate the detected conflict, but rather waits until it detects a that a reporting criterion is fulfilled at 505, and then indicates the detected conflict to at least one of the base stations 100-A, 100-B. Various kinds of reporting criteria may be applied. For example, the conflict could only be indicated if multiple instances of the same conflict type were detected. Then these multiple instances of the conflict could be indicated together, e.g., in an aggregated conflict report. Further, the detected conflict could be indicated only if at least one of the conflicting control information 501, 502 is associated with a certain minimum priority. In some scenarios, the reporting criterion applied at 505 can be configurable, e.g., by higher layer control information or based on settings defined by the operator of the cellular radio network and/or defined by a device manufacturer of the UE 10-A.

In the example of Fig. 5, indication of the detected conflict is accomplished by sending a conflict report 506 to the base station 100-A. The conflict report 506 may be part of physical layer control information, e.g., be conveyed on a PUCCH of the first base station 100-A. As further illustrated, the UE 10-A may alternatively or additionally also send a conflict report 507 to the base station 100-B. The conflict report 507 may be part of physical layer control information, e.g., be conveyed on a PUCCH of the second base station 100-B. In some scenarios, it can be beneficial, e.g., in view of resource efficiency, to indicate the conflict to only that base station 100-A, 100-B which transmitted the control information 501, 502 for which the associated operation was not selected by the UE 10-A.

The conflict report 506, 507 may for example include information which allows for identifying the conflicting control information 501, 502, e.g., in terms of time or frequency resources to which a conflicting assignment of radio resources relates. In some scenarios, the conflict report 506, 507 could also indicate multiple conflicts in an aggregated manner, e.g., the above-mentioned instances of the conflict which triggered the indication of the conflict at 505.

Depending on the received conflict report 506, 507 or depending on whether a conflict report 506, 507 was received for the transmitted control information, the base stations 100-A, 100-B may adjust their further operation, e.g., as explained in connection with the conflict reports 305, 306 of Fig. 3.

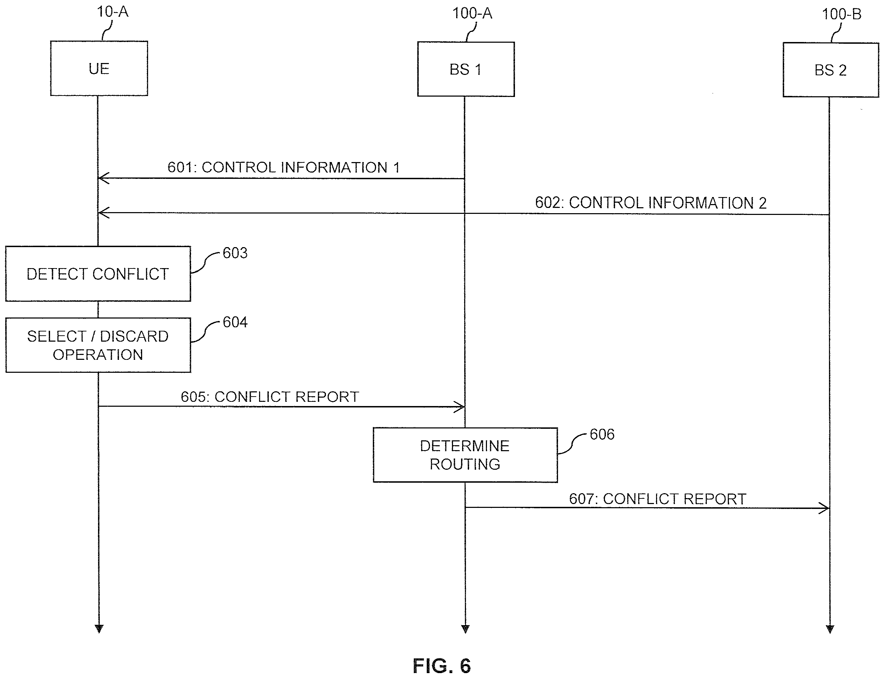

In some scenarios, rather than providing the indication of the detected conflict directly from the UE to the base station, it may also be routed through one or more intermediate stations, e.g., through another UE, through another base station, and/or through some other node of the cellular network. This may for example be beneficial if a direct radio link for sending the indication of the conflict is not available, e.g., due to the conflict. An example of corresponding processes is illustrated in Fig. 6.

The processes of Fig. 6 involve a UE 10-A, a first base station (BS 1) 100-A, and a second base station (BS 2) 100-B, e.g., as illustrated in Fig. 1. However, it is to be understood that similar processes could also be applied when replacing at least one of the base station 100-A and the base station 100-B with an additional UE, e.g., in a scenario as illustrated in Fig. 2.

As illustrated, the first base station 100-A sends first control information 601 to the UE 10-A. The first control information 601 may for example include an assignment of radio resources to the UE 10-A, an assignment of processing resources of the UE 10-A to a certain utilization, and/or a TPC command. The first control information 601 may be part of physical layer control information, e.g., be conveyed in DCI on a PDCCH of the first base station 100-A.

As further illustrated, the second base station 100-B sends second control information 602 to the UE 10-A. The second control information 602 may for example include an assignment of radio resources to the UE 10-A, an assignment of processing resources of the UE 10-A to a certain utilization, and/or a TPC command. The second control information 602 may be part of physical layer control information, e.g., be conveyed in DCI on a PDCCH of the second base station 100-B.

At 603, the UE 10-A detects a conflict of the first control information 601 and the second control information 602. For example, this conflict may be due to the first control information 601 and the second control information 602 assigning at least partially overlapping radio resources to different utilizations, the first control information 601 and the second control information 602 assigning processing resources of the UE 10-A to different utilizations, and/or the first control information 601 and the second control information 602 including TPC commands aiming at different transmit power adjustments. The UE 10-A may detect such conflict by analyzing the received control information 601, 602 before applying the control information 601, 602.

At 604, the UE 10-A selects between initiating an operation associated with the first control information 601 and initiating an operation associated with the second control information 502. For example, if the first control information 601 includes an assignment of radio resources, the operation associated with the first control information 601 may involve sending or receiving data on the assigned radio resources. Further, if the first control information 601 includes an assignment of processing resources of the UE 10-A to a certain utilization, the operation associated with the first control information 601 may involve utilizing the assigned processing resources in a corresponding manner. Further, if the first control information 601 includes a TPC command, the operation associated with the first control information 601 may involve adjusting the transmit power of the UE 10-A as indicated by the TPC command. Similarly, if the second control information 602 includes an assignment of radio resources, the operation associated with the second control information 602 may involve sending or receiving data on the assigned radio resources. Further, if the second control information 602 includes an assignment of processing resources of the UE 10-A to a certain utilization, the operation associated with the second control information 602 may involve utilizing the assigned processing resources in a corresponding manner. Further, if the second control information 602 includes a TPC command, the operation associated with the second control information 602 may involve adjusting the transmit power of the UE 10-A as indicated by the TPC command.

The UE 10-A may perform the selection on the basis of priorities configured in the UE 10-A before receiving the first control information 601 and the second control information 602, e.g., based on higher layer control signaling or based on default settings defined by an operator of the cellular radio network or by a device manufacturer of the UE 10-A. In addition or as an alternative, the selection may also be based on a priority dynamically signaled together with at least one of the first control information 601 and the second control information 602. For example, such dynamically signaled priority could override a pre-configured priority configured based on default settings.

When selecting one of the operation associated with the first control information 601 and the operation associated with the second control information 602, the UE 10-A may at the same time discard at least a part of the control information 601, 602 associated with the operation which was not selected. However, in some cases it can also be possible for the UE 10-A to utilize some part of this control information 601, 602, e.g., a part of the control information 601, 602 which is associated with a non-conflicting operation.

Selecting one operation at 604 may in some cases affect the radio link from the UE 10-A to one of the base stations 100-A, 100-B. For example, if the UE 10-A selects the operation associated with the first control information 601, transmitted by the base station 100-A, the radio link from the UE 10-A to the base station 100-B may be affected so that indicating the detected conflict via this radio link is not possible.

In response to the selection of 604, the UE 10-A may not be able to directly indicate the conflict to the second base station 100-B, but only to the first station 100-B. The latter is accomplished by sending a conflict report 605 to the base station 100-A. The conflict report 605 may be part of physical layer control information, e.g., be conveyed on a PUCCH of the first base station 100-A. The first base station 100-A then determines that the indication of the conflict should be further routed to the second base station 100-B, as indicated at 606, and sends a corresponding conflict report 607 to the second base station 100-B. The conflict report 607 may for example be conveyed via an inter-base station interface, such as the X2 interface specified for the LTE cellular radio technology. The determination of the routing at 606 may be based on rules configured in the first base station 100-A and/or on information included in the conflict report 605. For example, the UE 10-A could provide the conflict report 605 with an indication that the indicated conflict shall be further reported to the base station 100-B.

The conflict report 605, 607 may for example include information which allows for identifying the conflicting control information 601, 602, e.g., in terms of time or frequency resources to which a conflicting assignment of radio resources relates. In some scenarios, the conflict report 606, 607 could also indicate multiple conflicts in an aggregated manner.

Depending on the received conflict report 605, 607 or depending on whether a conflict report 605, 607 was received for the transmitted control information, the base stations 100-A, 100-B may adjust their further operation, e.g., as explained in connection with the conflict reports 305, 306 of Fig. 3.

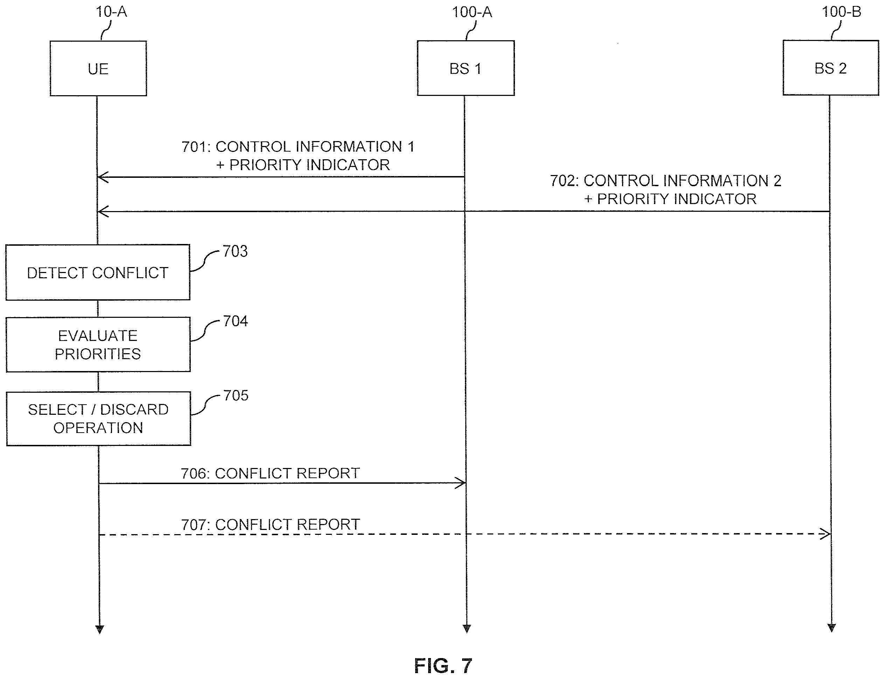

As mentioned above, in some scenarios the control information transmitted by the different devices may be associated with a dynamically determined priority. An example of corresponding processes is illustrated in Fig. 7.

The processes of Fig. 7 involve a UE 10-A, a first base station (BS 1) 100-A, and a second base station (BS 2) 100-B, e.g., as illustrated in Fig. 1. However, it is to be understood that similar processes could also be applied when replacing at least one of the base station 100-A and the base station 100-B with an additional UE, e.g., in a scenario as illustrated in Fig. 2.

As illustrated, the first base station 100-A sends first control information 701 to the UE 10-A. The first control information 701 may for example include an assignment of radio resources to the UE 10-A, an assignment of processing resources of the UE 10-A to a certain utilization, and/or a TPC command. The first control information 701 may be part of physical layer control information, e.g., be conveyed in DCI on a PDCCH of the first base station 100-A. As further illustrated, the first control information 701 includes a priority indicator defining a priority level of the first control information 701.

As further illustrated, the second base station 100-B sends second control information 702 to the UE 10-A. The second control information 702 may for example include an assignment of radio resources to the UE 10-A, an assignment of processing resources of the UE 10-A to a certain utilization, and/or a TPC command. The second control information 702 may be part of physical layer control information, e.g., be conveyed in DCI on a PDCCH of the second base station 100-B. As further illustrated, the second control information 702 includes a priority indicator defining a priority level of the second control information 702.

The priority indicator may for example be encoded using a number of bits or code-points in the DCI of the PDCCH or similar control channel. The priority indicator may be encoded by a single bit, indicating high or low priority, or by multiple bits more than two different priority levels. In some scenarios, the priority indicator may also be jointly encoded with other information. For example, an indication of a data flow or bearer could be included in the control information and this indication may be utilized both for determining the priority level and for determining a mapping of transmitted data to buffers. In some implementations, the priority indicator may also be jointly encoded with information defining transport block size, radio resource allocation size, or radio resource allocation position. In some implementations, the priority indicator may also be jointly encoded with information defining a precoding mode. For example, a diversity precoding mode indicated in the control information could at the same time indicate a high priority and beamforming precoding mode indicated in the control information could at the same time indicate a low priority.

The base stations 100-A, 100-B may set the priority indicators based on various considerations. For example, the priority indicator could be set depending on a radio channel, e.g., bearer, time slot, or frequency range to which the control information relates. The priority indicator can be set in a static manner. For example, in the case of a self-backhaul scenario all transported data need a backhaul connection, so that control information relating to the backhaul connection may be statically assigned a high priority. In addition, the priority indicator could be dynamically set, e.g., depending on a priority of data carried on a radio link or channel to which the control information relates. The assigned priority for the same kind of control information and related to the same radio link or channel may thus change over time. For example, for an assignment of radio resources related to a transmission of data which is old, the priority indicator may be set to indicate a higher priority, e.g., if a latency budget for the data is running out.

In some scenarios the priority indicator may also be set depending on a service which is provided over a radio link or channel to which the control information relates. For example if a radio connection is needed for public safety purposes, e.g., for a relay connection to a fire truck, the priority indicator for control information can be set to correspond to a high priority. In this way, it can for example be achieved that assignments of radio resources for the public safety service can override other conflicting assignments of radio resources. In some cases, the priority indicator can also be set to a lower value, e.g., in the case of a service based on opportunistic usage of radio resources, for which data transmissions are allowed as long as no other service is scheduled on the same radio resource. In this case the setting of the priority indicator may vary as a function of services at disposal.

At 703, the UE 10-A detects a conflict of the first control information 701 and the second control information 702. For example, this conflict may be due to the first control information 701 and the second control information 702 assigning at least partially overlapping radio resources to different utilizations, the first control information 701 and the second control information 702 assigning processing resources of the UE 10-A to different utilizations, and/or the first control information 701 and the second control information 702 including TPC commands aiming at different transmit power adjustments. The UE 10-A may detect such conflict by analyzing the received control information 701, 702 before applying the control information 701, 702.

At 704. the UE 10-A evaluates a priority order of the first control information 701 and the second control information 702. This may for example involve comparing the priority levels defined by the priority indicators included in the first control information 701 and the second control information 702. However, it is to be understood that also other information could be considered in the evaluation of the priority order, e.g., a priority level assigned to the first base station 100-A and/or a priority level assigned to the second base station 100-B, e.g., as configured in the UE 10-A before receiving the first control information 701 and the second control information 702, weights implicitly derived from the first control information 701 or second control information 702, and/or characteristics of traffic from the first base station 100-A or characteristics of traffic from the second base station 100-B as observed in the past. The evaluation of the priority order may also depend on the capabilities of the UE or a class of a subscription associated with the UE, e.g., as derivable from information on a Subscriber Identity Module (SIM).

At 705, the UE 10-A selects between initiating an operation associated with the first control information 701 and initiating an operation associated with the second control information 702. For example, if the first control information 701 includes an assignment of radio resources, the operation associated with the first control information 701 may involve sending or receiving data on the assigned radio resources. Further, if the first control information 701 includes an assignment of processing resources of the UE 10-A to a certain utilization, the operation associated with the first control information 701 may involve utilizing the assigned processing resources in a corresponding manner. Further, if the first control information 701 includes a TPC command, the operation associated with the first control information 701 may involve adjusting the transmit power of the UE 10-A as indicated by the TPC command. Similarly, if the second control information 702 includes an assignment of radio resources, the operation associated with the second control information 702 may involve sending or receiving data on the assigned radio resources. Further, if the second control information 702 includes an assignment of processing resources of the UE 10-A to a certain utilization, the operation associated with the second control information 702 may involve utilizing the assigned processing resources in a corresponding manner. Further, if the second control information 702 includes a TPC command, the operation associated with the second control information 702 may involve adjusting the transmit power of the UE 10-A as indicated by the TPC command.

In the example of Fig. 7, the UE 10-A performs the selection on the basis of the priority order evaluated at 704. Specifically, the operation associated with control information 701, 702 having the higher priority is selected, while the other control information is discarded at least partially.

After the selection of 705, the UE 10-A indicates the detected conflict to at least one of the base stations 100-A, 100-B. which is accomplished by sending a conflict report 706 to the base station 100-A. The conflict report 706 may be part of physical layer control information, e.g., be conveyed on a PUCCH of the first base station 100-A. As further illustrated, the UE 10-A may alternatively or additionally also send a conflict report 707 to the base station 100-B. The conflict report 707 may be part of physical layer control information, e.g., be conveyed on a PUCCH of the second base station 100-B. In some scenarios, it can be beneficial, e.g., in view of resource efficiency, to indicate the conflict to only that base station 100-A, 100-B which transmitted the control information 701, 702 for which the associated operation was not selected by the UE 10-A.

The conflict report 706, 707 may for example include information which allows for identifying the conflicting control information 701, 702, e.g., in terms of time or frequency resources to which a conflicting assignment of radio resources relates. In some scenarios, the conflict report 706, 707 could also indicate multiple conflicts in an aggregated manner, e.g., the above-mentioned instances of the conflict which triggered the indication of the conflict at 705.

Depending on the received conflict report 706, 707 or depending on whether a conflict report 706, 707 was received for the transmitted control information, the base stations 100-A, 100-B may adjust their further operation, e.g., as explained in connection with the conflict reports 305, 306 of Fig. 3.

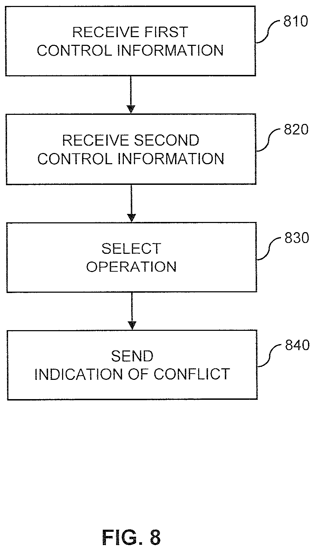

Fig. 8 shows a flowchart for illustrating a method of controlling radio transmission. The method may be used for implementing the above-described concepts in a radio device, e.g., in a UE supporting a cellular radio network technology, such as the UE 10-A. If a processor based implementation of the radio device is used, one or more processors of the radio device may be configured to perform the steps of the method or to control the radio device in such a way that the radio device performs the method. For this purpose, the processor(s) may execute correspondingly configured program code. Further, at least some of the corresponding functionalities may be hardwired in the processor(s).

At step 810, the radio device receives first control information from a device. If the radio device is a UE supporting a certain cellular radio network technology, the device could be a base station of a cellular radio network based on this cellular radio network technology, such as one of the above-mentioned base stations 100-A, 100-B. Alternatively, the device could be a further UE supporting the cellular radio network technology and be connected to the UE on the basis of a device-to-device communication mode of the cellular radio network technology. The first control information is associated with an operation to be performed by the radio device in response to receiving the first control information.

At step 820, the radio device receives second control information from another device. If the radio device is a UE supporting a certain cellular radio network technology, the other device could be a base station of a cellular radio network based on this cellular radio network technology, such as one of the above-mentioned base stations 100-A, 100-B. Alternatively, the other device could be a further UE supporting the cellular radio network technology and be connected to the UE on the basis of a device-to-device communication mode of the cellular radio network technology. The second control information is associated with an operation to be performed by the radio device in response to receiving the second control information.

Accordingly, the method of Fig. 8 may be applied in various scenarios of communication on the basis of a cellular radio network technology: utilizing the cellular radio network technology for communication of a UE with two different base stations, such as in the scenario of Fig. 1, utilizing the cellular radio network technology for communication of a UE with a base station and device-to-device communication with a further UE, such as in the scenario of Fig. 2, or even utilizing the cellular radio network technology for device-to-device communication with two different further UEs.

In some scenarios, at least one of the first control information and the second control information may include an assignment of radio resources. The assigned radio resources may be defined in the time and/or frequency domain. For example, the first control information may assign first radio resources to a first utilization by the radio device and the second control information may assign second radio resources to a second utilization by the radio device. A conflict may then arise due to the first radio resources and the second radio resources being overlapping and the first utilization and the second utilization being different. For example, according to the first utilization the overlapping radio resources could be allocated to one radio link while according to the second utilization the overlapping radio resources are allocated to another radio link.

In some scenarios, at least one of the first control information and the second control information may include a transmit power assignment, e.g., in the form of a TPC command.

For example, the first control information may assign a first transmit power to the radio device and the second control information may assign a second transmit power to the radio device. A conflict may then arise due to the first transmit power being different from the second transmit power.

In some scenarios, at least one of the first control information and the second control information includes an assignment of processing resources provided by the radio device. For example, the first control information may assign processing resources of the radio device to a first utilization and the second control information may assign the processing resources to a second utilization. An example of such processing resources are processing resources of a transmit or receive chain. A conflict may then arise due the first utilization blocking the processing resources from being available for the second utilization or vice versa. For example, certain processing resources of a receive or transmit chain could be available for only one radio link, preventing utilization of these processing resources for another radio link.

At step 830, the radio device selects between initiating an operation associated with the first control information and initiating am operation associated with the second control information. This is accomplished in response to detecting a conflict of the operation associated with the first control information and the operation associated with the second control information. When selecting initiating the operation associated with the first control information, the second control information may be discarded at least partially. Similarly, when selecting initiating the operation associated with the second control information, the first control information may be discarded at least partially.

The radio device may perform the selection of step 830 based on a priority assigned to the first control information and/or on a priority assigned to the second control information. In some scenarios, a priority may be assigned to both the first control information and the second control information, e.g., by a respective priority indicator such as in the example of Fig. 7. However, in some scenarios also a certain default priority may be assumed for all control information unless another (higher or lower) priority is assigned to the control information.

As illustrated by the example of Fig. 7, the assigned priority may be determined on the basis of a first priority indicator in the first control information and/or a second priority indicator in the second control information. However, the assigned priority could also be determined by additionally or alternatively considering other information. Such other information may include a characteristic of the device which sent the control information, such as whether the device is a base station or a UE or whether the device is a macro base station or a pico base station. For example, a higher priority could be assigned to control information from a base station than to control information from a UE, or a higher priority could be assigned to control information from a macro base station than to control information from a pico base station. The other information considered when determining the assigned priority could also include characteristics of traffic from the device which sent the control information, as observed by the radio device in the past. For example, a higher priority could be assigned to control information from a device from which the radio device received more traffic than to control information from a device from which the radio device received less traffic.

In some scenarios, the assigned priority may also depend on a fixed or configurable priority associated with a radio channel used for transmitting the control information, e.g., based on channel type, utilized carrier, or utilized connection type. The assigned priority may also depend on a transmission direction to which the control information relates. For example, the assigned priority may differ between control information assigning UL radio resources and control information assigning DL radio resources. The assigned priority may also depend on quality of a channel used for transmitting the control information or a predicted probability of successfully decoding or applying the control information. The assigned priority may also depend on a service conveyed on a radio link or channel to which the control information relates.

In some scenarios, also conflicts of control information from more than two different devices may occur. For example, the first control information could be conflicting with the second control information and third control information from a still further device, e.g., a further base station or further UE. In such cases, the selection of the operation to be initiated may be accomplished according to a priority order of the received control information. Alternatively, the selection may be accomplished with the aim of maximizing an aggregate priority value which combines the individual priorities of the received control information. The aggregate priority value may be based on a sum over the individual priorities or to a weighted sum of the individual priorities.

At step 840, the radio device sends an indication of the conflict to at least one of the device and the other device. In some scenarios, in response to selecting initiating the operation associated with the first control information, the radio device may send the indication of the conflict to the other device, whereas in response to selecting initiating the operation associated with the second control information, the radio device may send the indication of the conflict to the device. In this way, that one of the devices which sent the control information which was not selected as basis for initiating the operation at step 830 may be informed in an efficient manner that the radio device may react differently than expected when applying this control information. This device may then adjust its operation accordingly.

In some scenarios, the sending of the indication of the conflict of step 840 may be triggered by the selection of step 830. However, it is also possible that the sending of the indication of the conflict is triggered depending on one or more further criteria, e.g., priority of the control information, a number of detected conflicts exceeding a threshold, or availability of an opportunity for sending the indication of the conflict.

In view of the above-described functionalities, a radio device for implementing the illustrated concepts may be provided with a module configured to receive first control information from a device, such as explained in connection with step 810, a module configured to receive second control information from another device, such as explained in connection with step 820, a module configured to select between initiating an operation associated with the first control information and initiating an operation associated with the second control information, in response to detecting a conflict of these operations, such as explained in connection with step 830, and a module configured to send an indication of the detected conflict to at least one of the device and the other device, such as explained in connection with step 840. Further, the radio device may be provided with one or more further modules configured to perform any further operations associated with functionalities as described above.

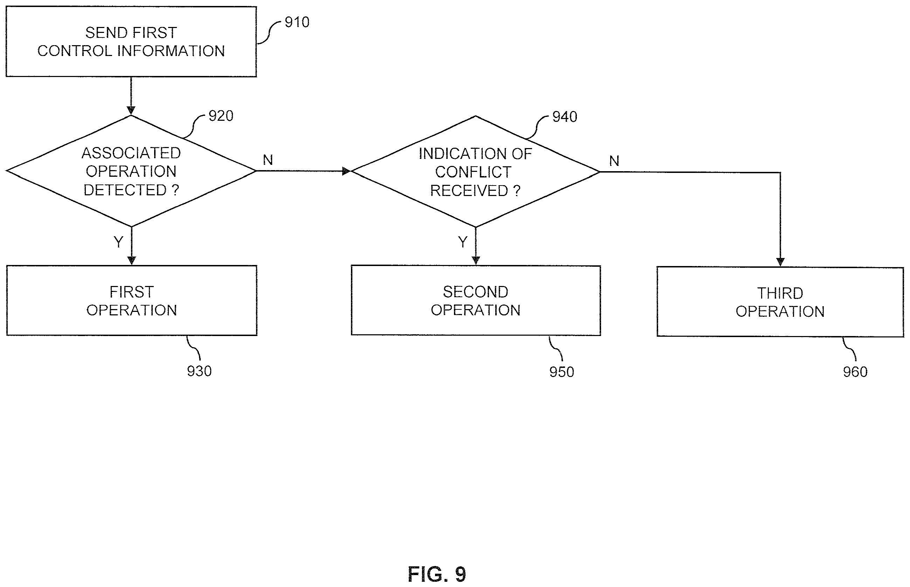

Fig. 9 shows a flowchart for illustrating a further method of controlling radio transmission. The method may be used for implementing the above-described concepts in a device which is responsible for controlling a radio device. The radio device may for example be a UE supporting a cellular radio network technology, such as the UE 10-A. The device may then correspond to a base station of a cellular radio network based on this cellular radio network technology, such as one of the above-mentioned base stations 100-A, 100-B, or the device may correspond to a further UE connected to the UE on the basis of a device-to-device communication mode of the cellular radio network technology, such as the UE 10-B. If a processor based implementation of the device is used, one or more processors of the radio device may be configured to perform the steps of the method or to control the device in such a way that the device performs the method. For this purpose, the processor(s) may execute correspondingly configured program code. Further, at least some of the corresponding functionalities may be hardwired in the processor(s).

At step 910, the device sends first control information to the radio device. The first control information may include an assignment of radio resources. The assigned radio resources may be defined in the time and/or frequency domain. Further, the first control information may include a transmit power assignment, e.g., in the form of a TPC command. For example, the first control information may assign a first transmit power to the radio device. Further, the first control information may include an assignment of processing resources provided by the radio device. For example, the first control information may assign processing resources of the radio device to a first utilization. An example of such processing resources are processing resources of a transmit or receive chain, which can be used for different radio links.

In some scenarios, the first control information may also include a priority indicator enabling the radio device to determine a priority assigned to the first control information, e.g., as explained in connection with the example of Fig. 7.

At step 920, the device may determine whether the radio device performed an operation associated with the first control information. If this is the case, the device may perform a first operation at step 930, as indicated by branch "Y". Otherwise, the device may proceed to step 940, as indicated by branch "N".

The first operation of step 930 may for example involve an assignment of radio resources based on detecting that the radio device performed the operation associated with the first control information, an estimation of a service quality based on detecting that the radio device performed the operation associated with the first control information, a link adaptation based on detecting that the radio device performed the operation associated with the first control information, and a reconfiguration of the radio device based on detecting that the radio device performed the operation associated with the first control information.

At step 940, the device may determine whether it received an indication of a conflict of the operation associated with the first control information and an operation associated with second control information received by the radio device from another device. If the radio device is a UE supporting a cellular radio network technology, such as the UE 10-A, the other device may then correspond to a base station of a cellular radio network based on this cellular radio network technology, such as one of the above-mentioned base stations 100-A, 100-B, or the other device may correspond to a further UE connected to the UE on the basis of a device-to-device communication mode of the cellular radio network technology, such as the UE 10-B.

Accordingly, the method of Fig. 9 may be applied in various scenarios of communication on the basis of a cellular radio network technology: utilizing the cellular radio network technology for communication of a UE with two different base stations, such as in the scenario of Fig. 1, utilizing the cellular radio network technology for communication of a UE with a base station and device-to-device communication with a further UE, such as in the scenario of Fig. 2, or even utilizing the cellular radio network technology for device-to-device communication with two different further UEs.

In some scenarios, the second control information may include an assignment of radio resources. For example, the first control information may assign first radio resources to a first utilization by the radio device and the second control information may assign second radio resources to a second utilization by the radio device. The indicated conflict may then arise due to the first radio resources and the second radio resources being overlapping and the first utilization and the second utilization being different. For example, according to the first utilization the overlapping radio resources could be allocated to one radio link while according to the second utilization the overlapping radio resources are allocated to another radio link.

In some scenarios, the second control information may include a transmit power assignment, e.g., in the form of a TPC command. For example, the first control information may assign a first transmit power to the radio device and the second control information may assign a second transmit power to the radio device. The indicated conflict may then arise due to the first transmit power being different from the second transmit power.

In some scenarios, the second control information may include an assignment of processing resources provided by the radio device. For example, the first control information may assign processing resources of the radio device to a first utilization and the second control information may assign the processing resources to a second utilization. An example of such processing resources are processing resources of a transmit or receive chain. The indicated conflict may then arise due the first utilization blocking the processing resources from being available for the second utilization or vice versa. For example, certain processing resources of a receive or transmit chain could be available for only one radio link, preventing utilization of these processing resources for another radio link.

The indication of the conflict may indicate a selection by the radio device between initiating the operation associated with the first control information and initiating the operation associated with the second control information. Based on reception of the indication of the conflict, the device may therefore determine which behavior can be expected from the radio device.

If the indication of the conflict was found to be received at step 940, the device may perform a second operation at step 950, as indicated by branch "Y". Otherwise, if the indication of the conflict was found to be not received at step 940, the device may perform a third operation at step 960, as indicated by branch "N".

In some scenarios, if the first control information included an assignment of radio resources to the radio device, the second operation of step 950 may involve a reassignment of radio resources assigned by the first control information, such as explained in connection with the example of Fig. 4.

In some scenarios, if the first control information included an assignment of processing resources provided by the radio device, the second operation of step 950 may involve a reassignment of the processing resources assigned by the first control information.

The second operation of step 950 may for example involve an assignment of radio resources based on the indication of the conflict, an estimation of a service quality based on the indication of the conflict, a link adaptation based on the indication of the conflict, and/or a reconfiguration of the radio device based on the indication of the conflict based on the indication of the conflict.

The third operation of step 960 may for example involve an assignment of radio resources based on assuming that the radio device was not able to correctly receive or apply the operation associated with the first control information, an estimation of a service quality based on assuming that the radio device was not able to correctly receive or apply the operation associated with the first control information, a link adaptation based on assuming that the radio device was not able to correctly receive or apply the operation associated with the first control information, and a reconfiguration of the radio device based on assuming that the radio device was not able to correctly receive or apply the operation associated with the first control information.

In some scenarios, the second operation may also involve forwarding the indication of the conflict to the other device, such as explained in connection with the scenario of Fig. 6.

In view of the above-described functionalities, a device for implementing the illustrated concepts may be provided with a module configured to send first control information to a radio device, such as explained in connection with step 910, a module configured to detect whether an operation associated with the first control information was performed by the radio device, such as explained in connection with step 920, a module configured to detect whether an indication of a conflict of the operation associated with the first control information and an operation associated with second control information received by the radio device from another device, such as explained in connection with step 940, and a module configured to select a first operation in response to detecting that the radio device performed the operation associated with the first control information or to select a second operation in response to receiving the indication of the conflict, such as explained in connection with steps 920, 930, 940, and 950. Further, the device may be provided with one or more further modules configured to perform any further operations associated with functionalities as described above.

It is to be understood that the methods of Figs. 8 and 9 may also be combined with each other, e.g., in a system which includes a radio device operating according to the method of Fig. 8 and at least one device operating according to the method of Fig. 9. In such a system, the device operating according to the method of Fig. 9 could send the first control information to the radio device and the radio device could receive the first control information. Further, the radio device could receive second control information from another device, which may also operate according to the method of Fig. 9. In response to detecting a conflict of an operation associated with the first control information and an operation associated with the second control information, the radio device would select between initiating the operation associated with the first control information and initiating the operation associated with the second control information and send an indication of the conflict at least to the device which sent the first control information. In response detecting that the radio device performed the operation associated with the first control information, this device would perform a first operation, while in response to receiving the indication of the conflict, this device would perform a second operation.

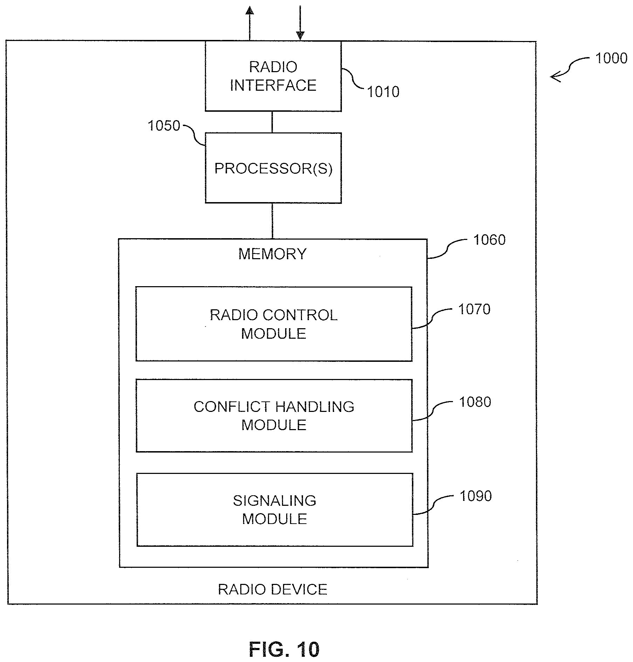

Fig. 10 illustrates exemplary structures which may be used for implementing the above concepts in a radio device 1000, e.g., the UE 10-A.

As illustrated, the radio device 1000 may include a radio interface 1010 for connecting to other devices, e.g., to the base station 100-A, the base station 100-B, and/or to the further UE 10-B. Each of such further devices may assume control responsibilities for the radio device 1000 and send control information via the radio interface to the radio device 1000. The radio device 1000 may receive this control information via the radio interface 1010. Further, the radio interface 1010 may also be utilized for performing radio transmissions to or from the radio device 1000.

Further, the radio device 1000 includes one or more processors 1050 coupled to the radio interface 1010, and a memory 1060 coupled to the processor(s) 1050. The memory 1060 may include a Read Only Memory (ROM), e.g., a flash ROM, a Random Access Memory (RAM), e.g., a Dynamic RAM (DRAM) or Static RAM (SRAM), a mass storage, e.g., a hard disk or solid state disk, or the like. The memory 1060 includes suitably configured program code to be executed by the processor(s) 1050 so as to implement the above-described functionalities of a radio device. In particular, the memory 1060 may include various program code modules for causing the radio device 1000 to perform processes as described above, e.g., corresponding to the method steps of Fig. 8. As illustrated, the memory 1060 may include a radio control module 1070 for implementing functionalities of performing or controlling radio transmissions, which may include receiving the first and second control information from different devices, e.g., as explained in connection with steps 810 and 820 of Fig. 8, and optionally also performing radio transmissions based on such received control information. Further, the memory 1060 may include a conflict handling module 1080 for implementing the above-described functionalities of detecting a conflict related to control information received from different devices and selecting between operations associated with conflicting received control information, such as explained in connection with step 830 of Fig. 8. Further, the memory 1060 may include a signaling module 1090 for implementing the above-described functionalities of sending the indication of the conflict, such as explained in connection with step 840 of Fig. 8.

It is to be understood that the structures as illustrated in Fig. 10 are merely schematic and that the radio device 1000 may actually include further components which, for the sake of clarity, have not been illustrated, e.g., further interfaces or processors. For example, the radio device 1000 could be provided with two or more radio interfaces, and the different control information could be received via the same radio interface or via different radio interfaces. Also, it is to be understood that the memory 1060 may include further types of program code modules, which have not been illustrated, e.g., program code modules for implementing known functionalities of a UE. According to some embodiments, also a computer program may be provided for implementing functionalities of the radio device 1000, e.g., in the form of a physical medium storing the program code and/or other data to be stored in the memory 1060 or by making the program code available for download or by streaming.

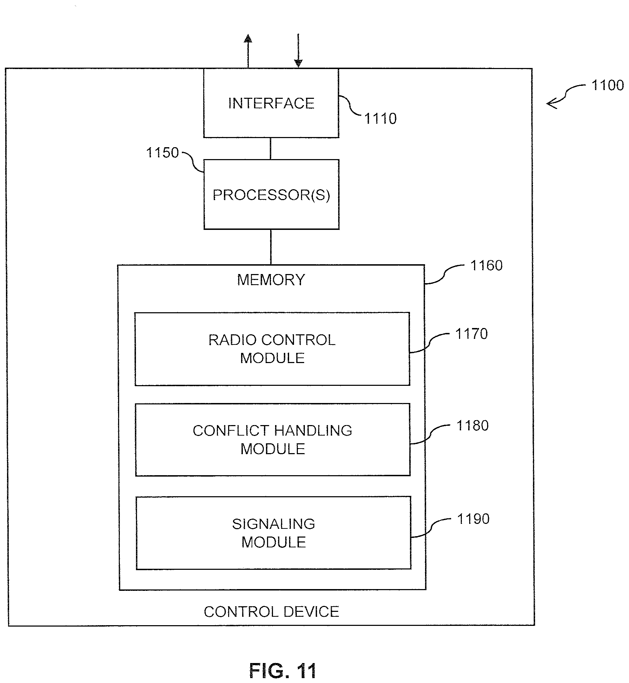

Fig. 11 illustrates exemplary structures which may be used for implementing the above concepts in a device 1100 which controls a radio device, e.g., in the base station 100-A or 100-B, or in the UE 10- B.

As illustrated, the device 1100 may include an interface 1110 for connecting to a radio device. In some implementations, e.g., if the device 1100 is a base station of a cellular radio network or if the device 1100 is a UE, the interface may correspond to a radio interface. However, it is also possible that the interface 1110 is based on another type of interface technology. For example, the device 1100 could corresponds to a node in a core network part of a cellular radio network and the interface 1110 could correspond to a wire-based interface to a node in a radio access network part of the cellular radio network. The interface 1110 may be utilized for sending control information to the controlled radio device and for receiving an indication of a conflict of an operation associated with the control information and an operation associated with further control information received by the controlled radio device. Further, the interface 1110 may also be utilized for performing radio transmissions to or from the controlled radio device.

Further, the device 1100 includes one or more processors 1150 coupled to the interface 1110, and a memory 1160 coupled to the processor(s) 1150. The memory 1160 may include a ROM, e.g., a flash ROM, a RAM, e.g., a DRAM or SRAM, a mass storage, e.g., a hard disk or solid state disk, or the like. The memory 1160 includes suitably configured program code to be executed by the processor(s) 1150 so as to implement the above-described functionalities of a device controlling a radio device. In particular, the memory 1160 may include various program code modules for causing the device 1100 to perform processes as described above, e.g., corresponding to the method steps of Fig. 9. As illustrated, the memory 1160 may include a radio control module 1170 for implementing functionalities of performing or controlling radio transmissions, which may include sending the first control information to the radio device, e.g., as explained in connection with step 910 of Fig. 9, and optionally also performing radio transmissions in accordance with this control information. Further, the memory 1160 may include a conflict handling module 1180 for implementing the above-described functionalities of selecting operations depending on whether the device 1100 received an indication of a conflict of an operation associated with the sent first control information and an operation associated with second control information received by the radio device from another device, such as explained in connection with steps 920, 930, 940, 950, and 960 of Fig. 9. Further, the memory 1160 may include a signaling module 1190 for implementing the above-described functionalities of receiving the indication of the conflict, such as explained in connection with step 940 of Fig. 9.

It is to be understood that the structures as illustrated in Fig. 11 are merely schematic and that the device 1100 may actually include further components which, for the sake of clarity, have not been illustrated, e.g., further interfaces or processors. Also, it is to be understood that the memory 1160 may include further types of program code modules, which have not been illustrated, e.g., program code modules for implementing known functionalities of a base station, UE, or other kind of device which may control a radio device by sending corresponding control information. According to some embodiments, also a computer program may be provided for implementing functionalities of the device 1100, e.g., in the form of a physical medium storing the program code and/or other data to be stored in the memory 1160 or by making the program code available for download or by streaming.

As can be seen, the concepts as described above may be used for efficiently addressing conflicts which may arise when different devices provide control information to the same radio device. By the conflict indication, the device from which the control information originated may be informed in which way the radio device can be expected to react and may adjust its operation accordingly.

It is to be understood that the examples and embodiments as explained above are merely illustrative and susceptible to various modifications. For example, various channels, protocols, or formats may be utilized for transmitting the indication of the conflict. Further, it is to be understood that the concepts may be applied in connection with various kinds of control information, without limitation to the above-mentioned examples of assignments of radio resources, assignments of processing resources, or TCP commands. Further, the concepts may also be extended to scenarios where more than two devices send conflicting control information. Further, it is to be understood that the illustrated devices may each be implemented by a single device or by a system of multiple cooperating devices. Moreover, it is to be understood that the above concepts may be implemented by using correspondingly designed software to be executed by one or more processors of an existing device, or by using dedicated device hardware.

## Claims

1. A method of controlling radio transmission, the method comprising:
a radio device (10-A; 1000) receiving first control information (21; 31; 301; 401; 501; 601; 701) from a device (10-B; 100-A; 1100);
the radio device (10-A; 1000) receiving second control information (22; 32; 302; 402; 502; 602; 702) from another device (100-B; 1100);
depending on at least one of a first priority indicator in the first control information (21; 31; 301; 401; 501; 601; 701) and a second priority indicator in the second control information (22; 32; 302; 402; 502; 602; 702), the radio device (10-A; 1000) determining a priority assigned to the first control information and/or a priority assigned to the second control information (22; 32; 302; 402; 502; 602; 702); and
in response to detecting a conflict of an operation associated with the first control information (21; 31; 301; 401; 501; 601; 701) and an operation associated with the second control information (22; 32; 302; 402; 502; 602; 702):
based on at least one of the priority assigned to the first control information (21; 31; 301; 401; 501; 601; 701) and the priority assigned to the second control information (22; 32; 302; 402; 502; 602; 702), the radio device (10-A; 1000) selecting between initiating the operation associated with the first control information (21; 31; 301; 401; 501; 601; 701) and initiating the operation associated with the second control information (22; 32; 302; 402; 502; 602; 702); and
the radio device (10-A; 1000) sending an indication (23; 33; 305, 306; 405, 406; 506, 507; 605; 706, 707) of the conflict to at least one of the device (10-B; 100-A; 1100) and the other device (100-B; 1100).

2. The method according to claim 1, comprising:
in response to selecting initiating the operation associated with the first control information (21; 31; 301; 401; 501; 601; 701), the radio device (10-A; 1000) sending the indication (23; 33; 305, 306; 405, 406; 506, 507; 605; 706, 707) of the conflict to the other device (100-B; 1100); and in response to selecting initiating the operation associated with the second control information (22; 32; 302; 402; 502; 602; 702), the radio device (10-A; 1000) sending the indication (23; 33; 305, 306; 405, 406; 506, 507; 605; 706, 707) of the conflict to the device (10-B; 100-A; 1100).

3. The method according to claim 1 or 2,
wherein at least one of the first control information (21; 31; 301; 401; 501; 601; 701) and the second control information (22; 32; 302; 402; 502; 602; 702) comprises an assignment of radio resources.

4. The method according to claim 3,
wherein the first control information (21; 31; 301; 401; 501; 601; 701) assigns first radio resources to a first utilization by the radio device (10-A; 1000) and the second control information (22; 32; 302; 402; 502; 602; 702) assigns second radio resources to a second utilization by the radio device (10-A; 1000),
wherein the first radio resources and the second radio resources are overlapping, and wherein the first utilization and the second utilization are different.

5. The method according to any one of the preceding claims,
wherein at least one of the first control information (21; 31; 301; 501; 601; 701) and the second control information (22; 32; 302; 502; 602; 702) comprises a transmit power assignment.

6. The method according to claim 5,
wherein the first control information (21; 31; 301; 501; 601; 701) assigns a first transmit power to the radio device (10-A; 1000) and the second control information (22; 32; 302; 502; 602; 702) assigns a second transmit power to the radio device (10-A; 1000), and
wherein the first transmit power is different from the second transmit power.

7. The method according to any one of the preceding claims,
wherein at least one of the first control information (21; 31; 301; 401; 501; 601; 701) and the second control information (22; 32; 302; 402; 502; 602; 702) comprises an assignment of processing resources provided by the radio device (10-A; 1000).

8. The method according to any one of the preceding claims,
wherein said sending of the indication (23; 33; 305, 306; 405, 406; 506, 507; 605; 706, 707) of the conflict is triggered by said selecting of initiating the operation associated with the first control information (21; 31; 301; 401; 501; 601; 701) or initiating the operation associated with the second control information (22; 32; 302; 402; 502; 602; 702).

9. A method of controlling radio transmission, the method comprising:
a device (10-B; 100-A; 1100) sending first control information (21; 31; 301; 401; 501; 601; 701) to a radio device (10-A; 1000), the first control information (21; 31; 301; 401; 501; 601; 701) including a priority indicator enabling the radio device (10-A; 1000) to determine a priority assigned to the first control information (21; 31; 301; 401; 501; 601; 701);
the device (10-B; 100-A; 1100) performing a first operation in response to detecting that the radio device (10-A; 1000) performed an operation associated with the first control information (21; 31; 301; 401; 501; 601; 701); and
the device (10-B; 100-A; 1100) performing a second operation in response to receiving an indication (23; 33; 305, 306; 405, 406; 506, 507; 605; 706, 707) of a conflict of the operation associated with the first control information (21; 31; 301; 401; 501; 601; 701) and an operation associated with second control information (22; 32; 302; 402; 502; 602; 702) received by the radio device (10-A; 1000) from another device (100-B; 1100).

10. The method according to claim 9,
wherein the indication (23; 33; 305, 306; 405, 406; 506, 507; 605; 706, 707) of the conflict further indicates a selection by the radio device (10-A; 1000) between initiating the operation associated with the first control information (21; 31; 301; 401; 501; 601; 701) and initiating the operation associated with the second control information (22; 32; 302; 402; 502; 602; 702).

11. The method according to claim 9 or 10,
wherein the first control information (21; 31; 301; 401; 501; 601; 701) comprises an assignment of radio resources.

12. The method according to claim 11,
wherein the second operation comprises a reassignment of radio resources assigned by the first control information (21; 31; 301; 401; 501; 601; 701).

13. The method according to any one of claims 9 to 12,
wherein the first control information (21; 31; 301; 501; 601; 701) comprises a transmit power assignment.

14. The method according to any one claims 9 to 13,
wherein the first control information (21; 31; 301; 401; 501; 601; 701) comprises an assignment of processing resources provided by the radio device (10-A; 1000).

15. The method according to claim 14,
wherein the second operation comprises a reassignment of the processing resources assigned by the first control information (21; 31; 301; 401; 501; 601; 701).

16. A radio device (10-A; 1000), the radio device (10-A; 1000) being configured to:
- receive first control information (21; 31; 301; 401; 501; 601; 701) from a device (10-B; 100-A; 1100);
- receive second control information (22; 32; 302; 402; 502; 602; 702) from another device (100-B; 1100);
- depending on at least one of a first priority indicator in the first control information (21; 31; 301; 401; 501; 601; 701) and a second priority indicator in the second control information (22; 32; 302; 402; 502; 602; 702), the radio device (10-A; 1000) determine a priority assigned to the first control information and/or a priority assigned to the second control information (22; 32; 302; 402; 502; 602; 702); and
- in response to detecting a conflict of an operation associated with the first control information (21; 31; 301; 401; 501; 601; 701) and an operation associated with the second control information (22; 32; 302; 402; 502; 602; 702):
- based on at least one of the priority assigned to the first control information (21; 31; 301; 401; 501; 601; 701) and the priority assigned to the second control information (22; 32; 302; 402; 502; 602; 702), select between initiating the operation associated with the first control information (21; 31; 301; 401; 501; 601; 701) and initiating the operation associated with the second control information (22; 32; 302; 402; 502; 602; 702); and
- send an indication (23; 33; 305, 306; 405, 406; 506, 507; 605; 706, 707) of the conflict to at least one of the device (10-B; 100-A; 1100) and the other device (100-B; 1100).

17. The radio device according to claim 16,
wherein the radio device (10-A; 1000) is configured to perform the steps of a method according to any one of claims 2 to 8.

18. A device (10-B, 100-A; 1100) for controlling a radio device (10-A; 1000), the device (10-B; 100-A; 1100) being configured to:
- send first control information (21; 31; 301; 401; 501; 601; 701) to the radio device (10-A; 1000), the first control information (21; 31; 301; 401; 501; 601; 701) including a priority indicator enabling the radio device (10-A; 1000) to determine a priority assigned to the first control information (21; 31; 301; 401; 501; 601; 701);
- perform a first operation in response to detecting that the radio device (10-A; 1000) performed an operation associated with the first control information (21; 31; 301; 401; 501; 601; 701); and
- perform a second operation in response to receiving, from the radio device (10-A; 1000), an indication (23; 33; 305, 306; 405, 406; 506, 507; 605; 706, 707) of a conflict of the operation associated with the first control information (21; 31; 301; 401; 501; 601; 701) and an operation associated with a second control information (22; 32; 302; 402; 502; 602; 702) received by the radio device (10-A; 1000) from another device (100-B; 1100).

19. The device (10-B; 100-A; 1100) according to claim 18,
wherein the device (10-B; 100-A; 1100) is configured to perform the steps of a method according to any one of claims 10 to 15.

20. A computer program comprising program code to be executed by at least one processor (1050) of a radio device (10-A; 1000), wherein execution of the program code by the at least one processor (1050) causes the radio device (10-A; 1000) to perform steps of a method according to any one of claims 1 to 8.

21. A computer program comprising program code to be executed by at least one processor (1150) of a device (10-B; 100-A; 1100) for controlling a radio device (10-A; 1000), wherein execution of the program code by the at least one processor (1150) causes the device (10-B; 100-A; 1100) to perform steps of a method according to any one of claims 9 to 15.

## Patentansprüche

1. Verfahren zur Steuerung von Funkübertragung, wobei das Verfahren umfasst, dass:
eine Funkvorrichtung (10-A; 1000), welche erste Steuerinformationen (21; 31; 301; 401; 501; 601; 701) von einer Vorrichtung (10-B; 100-A; 1100) empfängt;
wobei die Funkvorrichtung (10-A; 1000) zweite Steuerinformationen (22; 32; 302; 402; 502; 602; 702) von einer anderen Vorrichtung (100-B; 1100) empfängt;
die Funkvorrichtung (10-A; 1000) in Abhängigkeit von einem ersten Prioritätsindikator in den ersten Steuerinformationen (21; 31; 301; 401; 501; 601; 701) und/oder einem zweiten Prioritätsindikator in den zweiten Steuerinformationen (22; 32; 302; 402; 502; 602; 702) eine den ersten Steuerinformationen zugeordnete Priorität und/oder eine den zweiten Steuerinformationen (22; 32; 302; 402; 502; 602; 702) zugeordnete Priorität bestimmt; und
in Reaktion auf ein Erkennen eines Konflikts einer mit den ersten Steuerinformationen (21; 31; 301; 401; 501; 601; 701) assoziierten Operation und einer mit den zweiten Steuerinformationen (22; 32; 302; 402; 502; 602; 702) assoziierten Operation:
die Funkvorrichtung (10-A; 1000) basierend auf der den ersten Steuerinformationen (21; 31; 301; 401; 501; 601; 701) zugeordneten Priorität und/oder der den zweiten Steuerinformationen (22; 32; 302; 402; 502; 602; 702) zugeordneten Priorität zwischen einem Initiieren der mit den ersten Steuerinformationen (21; 31; 301; 401; 501; 601; 701) assoziierten Operation und Initiieren der mit den zweiten Steuerinformationen (22; 32; 302; 402; 502; 602; 702) assoziierten Operation auswählt; und
die Funkvorrichtung (10-A; 1000) eine Anzeige (23; 33; 305, 306; 405, 406; 506, 507; 605; 706, 707) des Konflikts an die Vorrichtung (10-B; 100-A; 1100) und/oder die andere Vorrichtung (100-B; 1100) sendet.

2. Verfahren nach Anspruch 1, umfassend, dass:
die Funkvorrichtung (10-A; 1000) in Reaktion auf ein Auswählen des Initiierens der mit den ersten Steuerinformationen (21; 31; 301; 401; 501; 601; 701) assoziierten Operation die Anzeige (23; 33; 305, 306; 405, 406; 506, 507; 605; 706, 707) des Konflikts an die andere Vorrichtung (100-B; 1100) sendet; und
die Funkvorrichtung (10-A; 1000) in Reaktion auf ein Auswählen des Initiierens der mit den zweiten Steuerinformationen (22; 32; 302; 402; 502; 602; 702) assoziierten Operation die Anzeige (23; 33; 305, 306; 405, 406; 506, 507; 605; 706, 707) des Konflikts an die Vorrichtung (10-B; 100-A; 1100) sendet.

3. Verfahren nach Anspruch 1 oder 2,
wobei die ersten Steuerinformationen (21; 31; 301; 401; 501; 601; 701) und/oder die zweiten Steuerinformationen (22; 32; 302; 402; 502; 602; 702) eine Zuordnung von Funkressourcen umfassen.

4. Verfahren nach Anspruch 3,
wobei die ersten Steuerinformationen (21; 31; 301; 401; 501; 601; 701) erste Funkressourcen zu einer ersten Nutzung durch die Funkvorrichtung (10-A; 1000) zuordnen, und die zweiten Steuerinformationen (22; 32; 302; 402; 502; 602; 702) zweite Funkressourcen zu einer zweiten Nutzung durch die Funkvorrichtung (10-A; 1000) zuordnen,
wobei die ersten Funkressourcen und die zweiten Funkressourcen einander überlappen, und
wobei die erste Nutzung und die zweite Nutzung verschieden sind.

5. Verfahren nach einem der vorhergehenden Ansprüche,
wobei die ersten Steuerinformationen (21; 31; 301; 401; 501; 601; 701) und/oder die zweiten Steuerinformationen (22; 32; 302; 402; 502; 602; 702) eine Sendeleistungszuordnung umfassen.

6. Verfahren nach Anspruch 5,
wobei die ersten Steuerinformationen (21; 31; 301; 501; 601; 701; 701) eine erste Sendeleistung zur Funkvorrichtung (10-A; 1000) zuordnen, und die zweiten Steuerinformationen (22; 32; 302; 502; 602; 702; 702) eine zweite Sendeleistung zur Funkvorrichtung (10-A; 1000) zuordnen, und
wobei die erste Sendeleistung von der zweiten Sendeleistung verschieden ist.

7. Verfahren nach einem der vorhergehenden Ansprüche,
wobei die ersten Steuerinformationen (21; 31; 301; 401; 501; 601; 701) und/oder die zweiten Steuerinformationen (22; 32; 302; 402; 502; 602; 702) eine Zuordnung von Verarbeitungsressourcen umfassen, die von der Funkvorrichtung (10-A; 1000) bereitgestellt werden.

8. Verfahren nach einem der vorhergehenden Ansprüche,
wobei das Senden der Anzeige (23; 33; 305, 306; 405, 406; 506, 507; 605; 706, 707) des Konflikts durch das Auswählen des Initiierens der mit den ersten Steuerinformationen (21; 31; 301; 401; 501; 601; 701) assoziierten Operation oder Initiierens der mit den zweiten Steuerinformationen (22; 32; 302; 402; 502; 602; 702) assoziierten Operation ausgelöst wird.

9. Verfahren zur Steuerung von Funkübertragung, wobei das Verfahren umfasst, dass:
eine Vorrichtung (10-B; 100-A; 1100) erste Steuerinformationen (21; 31; 301; 401; 501; 601; 701) an eine Funkvorrichtung (10-A; 1000) sendet, wobei die ersten Steuerinformationen (21; 31; 301; 401; 501; 601; 701) einen Prioritätsindikator umfassen, der die Funkvorrichtung (10-A; 1000) zum Bestimmen einer den ersten Steuerinformationen (21; 31; 301; 401; 501; 601; 701) zugeordneten Priorität befähigt;
die Vorrichtung (10-B; 100-A; 1100) in Reaktion auf ein Erkennen, dass die Funkvorrichtung (10-A; 1000) eine mit den ersten Steuerinformationen (21; 31; 301; 401; 501; 601; 701) assoziierte Operation durchführte, eine erste Operation durchführt; und
die Vorrichtung (10-B; 100-A; 1100) in Reaktion auf ein Empfangen einer Anzeige (23; 33; 305, 306; 405, 406; 506, 507; 605; 706, 707) eines Konflikts der mit den ersten Steuerinformationen (21; 31; 301; 401; 501; 601; 701) assoziierten Operation und einer mit den zweiten Steuerinformationen (22; 32; 302; 402; 502; 602; 702) assoziierten Operation, die durch die Funkvorrichtung (10-A; 1000) von einer anderen Vorrichtung (100-B; 1100) empfangen wird, eine zweite Operation durchführt.

10. Verfahren nach Anspruch 9,
wobei die Anzeige (23; 33; 305, 306; 405, 406; 506, 507; 605; 706, 707) des Konflikts ferner eine Auswahl durch die Funkvorrichtung (10-A; 1000) zwischen einem Initiieren der mit den ersten Steuerinformationen (21; 31; 301; 401; 501; 601; 701) assoziierten Operation und Initiieren der mit den zweiten Steuerinformationen (22; 32; 302; 402; 502; 602; 702) assoziierten Operation anzeigt.

11. Verfahren nach Anspruch 9 oder 10,
wobei die ersten Steuerinformationen (21; 31; 301; 401; 501; 601; 701) eine Zuordnung von Funkressourcen umfassen.

12. Verfahren nach Anspruch 11,
wobei die zweite Operation eine Neuzuordnung von Funkressourcen umfasst, die durch die ersten Steuerinformationen (21; 31; 301; 401; 501; 601; 701) zugeordnet werden.

13. Verfahren nach einem der Ansprüche 9 bis 12,
wobei die ersten Steuerinformationen (21; 31; 301; 401; 501; 601; 701) eine Sendeleistungszuordnung umfassen.

14. Verfahren nach einem der Ansprüche 9 bis 13, wobei die ersten Steuerinformationen (21; 31; 301; 401; 501; 601; 701) eine Zuordnung von Verarbeitungsressourcen umfassen, die von der Funkvorrichtung (10-A; 1000) bereitgestellt werden.

15. Verfahren nach Anspruch 14,
wobei die zweite Operation eine Neuzuordnung der Verarbeitungsressourcen umfasst, die durch die ersten Steuerinformationen (21; 31; 301; 401; 501; 601; 701) zugeordnet werden.

16. Funkvorrichtung (10-A; 1000), wobei die Funkvorrichtung (10-A; 1000) konfiguriert ist zum:
- Empfangen von ersten Steuerinformationen (21; 31; 301; 401; 501; 601; 701) von einer Vorrichtung (10-B; 100-A; 1100);
- Empfangen von zweiten Steuerinformationen (22; 32; 302; 402; 502; 602; 702) von einer anderen Vorrichtung (100-B; 1100);
- wobei die Funkvorrichtung (10-A; 1000) in Abhängigkeit von einem ersten Prioritätsindikator in den ersten Steuerinformationen (21; 31; 302; 401; 501; 601; 701) und/oder einem zweiten Prioritätsindikator in den zweiten Steuerinformationen (22; 32; 302; 402; 502; 602; 702) eine den ersten Steuerinformationen zugeordnete Priorität und/oder eine den zweiten Steuerinformationen (22; 32; 302; 402; 502; 602; 702) zugeordnete Priorität bestimmt; und
- in Reaktion auf ein Erkennen eines Konflikts einer mit den ersten Steuerinformationen (21; 31; 301; 401; 501; 601; 701) assoziierten Operation und einer mit den zweiten Steuerinformationen (22; 32; 302; 402; 502; 602; 702) assoziierten Operation:
- Auswählen basierend auf der den ersten Steuerinformationen (21; 31; 301; 401; 501; 601; 701) zugeordneten Priorität und/oder der den zweiten Steuerinformationen (22; 32; 302; 402; 502; 602; 702) zugeordneten Priorität zwischen einem Initiieren der mit den ersten Steuerinformationen (21; 31; 301; 401; 501; 601; 701) assoziierten Operation und Initiieren der mit den zweiten Steuerinformationen (22; 32; 302; 402; 502; 602; 702) assoziierten Operation; und
- Senden einer Anzeige (23; 33; 305, 306; 405, 406; 506, 507; 605; 706, 707) des Konflikts an die Vorrichtung (10-B; 100-A; 1100) und/oder die andere Vorrichtung (100-B; 1100).

17. Funkvorrichtung nach Anspruch 16,
wobei die Funkvorrichtung (10-A; 1000) zum Ausführen der Schritte eines Verfahrens nach einem der Ansprüche 2 bis 8 konfiguriert ist.

18. Vorrichtung (10-B, 100-A; 1100) zum Steuern einer Funkvorrichtung (10-A; 1000), wobei die Vorrichtung (10-B; 100-A; 1100) konfiguriert ist zum:
- Senden von ersten Steuerinformationen (21; 31; 301; 401; 501; 601; 701) an die Funkvorrichtung (10-A; 1000), wobei die ersten Steuerinformationen (21; 31; 301; 401; 501; 601; 701) einen Prioritätsindikator umfassen, der die Funkvorrichtung (10-A; 1000) zum Bestimmen einer den ersten Steuerinformationen (21; 31; 301; 401; 501; 601; 701) zugeordneten Priorität befähigt;
- Durchführen in Reaktion auf ein Erkennen, dass die Funkvorrichtung (10-A; 1000) eine mit den ersten Steuerinformationen (21; 31; 301; 401; 501; 601; 701) assoziierte Operation durchführte, einer ersten Operation; und
- Durchführen in Reaktion auf ein Empfangen einer Anzeige (23; 33; 305, 306; 405, 406; 506, 507; 605; 706, 707) von der Funkvorrichtung (10-A; 1000) eines Konflikts der mit den ersten Steuerinformationen (21; 31; 301; 401; 501; 601; 701) assoziierten Operation und einer mit den zweiten Steuerinformationen (22; 32; 302; 402; 502; 602; 702) assoziierten Operation, die durch die Funkvorrichtung (10-A; 1000) von einer anderen Vorrichtung (100-B; 1100) empfangen wird, einer zweiten Operation.

19. Vorrichtung (10-B; 100-A; 1100) nach Anspruch 18,
wobei die Vorrichtung (10-B; 100-A; 1100) zum Ausführen der Schritte eines Verfahrens nach einem der Ansprüche 10 bis 15 konfiguriert ist.

20. Computerprogramm, umfassend Programmcode, der durch mindestens einen Prozessor (1050) einer Funkvorrichtung (10-A; 1000) ausgeführt werden soll,
wobei die Ausführung des Programmcodes durch den mindestens einen Prozessor (1050) die Funkvorrichtung (10-A; 1000) zum Ausführen von Schritten eines Verfahrens nach einem der Ansprüche 1 bis 8 veranlasst.

21. Computerprogramm, umfassend Programmcode, der durch mindestens einen Prozessor (1150) einer Vorrichtung (10-B; 100-A; 1100) zum Steuern einer Funkvorrichtung (10-A; 1000) ausgeführt werden soll, wobei die Ausführung des Programmcodes durch den mindestens einen Prozessor (1150) die Vorrichtung (110-B; 100-A; 1100) zum Ausführen von Schritten eines Verfahrens nach einem der Ansprüche 9 bis 15 veranlasst.

## Revendications

1. Procédé de commande de transmission radio, le procédé comprenant :
un dispositif radio (10-A ; 1000) recevant des premières informations de commande (21 ; 31 ; 301 ; 401 ; 501 ; 601 ; 701) en provenance d'un dispositif (10-B ; 100-A ; 1100) ;
le dispositif radio (10-A ; 1000) recevant des deuxièmes informations de commande (22 ; 32 ; 302 ; 402 ; 502 ; 602 ; 702) en provenance d'un autre dispositif (100-B ; 1100) ;
en fonction d'au moins l'un d'un premier indicateur de priorité dans les premières informations de commande (21 ; 31 ; 301 ; 401 ; 501 ; 601 ; 701) et d'un deuxième indicateur de priorité dans les deuxièmes informations de commande (22 ; 32 ; 302 ; 402 ; 502 ; 602 ; 702), le dispositif radio (10-A ; 1000) déterminant une priorité assignée aux premières informations de commande et/ou une priorité assignée aux deuxièmes informations de commande (22 ; 32 ; 302 ; 402 ; 502 ; 602 ; 702) ; et
en réponse à une détection d'un conflit d'une opération associée aux premières informations de commande (21 ; 31 ; 301 ; 401 ; 501 ; 601 ; 701) et d'une opération associée aux deuxièmes informations de commande (22 ; 32 ; 302 ; 402 ; 502 ; 602 ; 702) :
sur la base d'au moins l'une de la priorité assignée aux premières informations de commande (21 ; 31 ; 301 ; 401 ; 501 ; 601 ; 701) et de la priorité assignée aux deuxièmes informations de commande (22 ; 32 ; 302 ; 402 ; 502 ; 602 ; 702), le dispositif radio (10-A ; 1000) sélectionnant entre le lancement de l'opération associée aux premières informations de commande (21 ; 31 ; 301 ; 401 ; 501 ; 601 ; 701) et le lancement de l'opération associée aux deuxièmes informations de commande (22 ; 32 ; 302 ; 402 ; 502 ; 602 ; 702) ; et
le dispositif radio (10-A ; 1000) envoyant une indication (23 ; 33 ; 305, 306 ; 405, 406 ; 506, 507 ; 605 ; 706, 707) du conflit à l'au moins un du dispositif (10-B ; 100-A ; 1100) et de l'autre dispositif (100-B ; 1100).

2. Procédé selon la revendication 1, comprenant :
en réponse à la sélection du lancement de l'opération associée aux premières informations de commande (21 ; 31 ; 301 ; 401 ; 501 ; 601 ; 701), le dispositif radio (10-A ; 1000) envoyant l'indication (23 ; 33 ; 305, 306 ; 405, 406 ; 506, 507 ; 605 ; 706, 707) du conflit à l'autre dispositif (100-B ; 1100) ; et
en réponse à la sélection du lancement de l'opération associée aux deuxièmes informations de commande (22 ; 32 ; 302 ; 402 ; 502 ; 602 ; 702), le dispositif radio (10-A ; 1000) envoyant l'indication (23 ; 33 ; 305, 306 ; 405, 406 ; 506, 507 ; 605 ; 706, 707) du conflit au dispositif (10-B ; 100-A ; 1100).

3. Procédé selon la revendication 1 ou 2,
dans lequel l'au moins une des premières informations de commande (21 ; 31 ; 301 ; 401 ; 501 ; 601 ; 701) et des deuxièmes informations de commande (22 ; 32 ; 302 ; 402 ; 502 ; 602 ; 702) comprend une assignation de ressources radio.

4. Procédé selon la revendication 3,
dans lequel les premières informations de commande (21 ; 31 ; 301 ; 401 ; 501 ; 601 ; 701) assignent des premières ressources radio à une première utilisation par le dispositif radio (10-A ; 1000) et les deuxièmes informations (22 ; 32 ; 302 ; 402 ; 502 ; 602 ; 702) assignent des deuxièmes ressources radio à une deuxième utilisation par le dispositif radio (10-A ; 1000),
dans lequel les premières ressources radio et les deuxièmes ressources radio se chevauchent, et
dans lequel la première utilisation est la deuxième utilisation sont différentes.

5. Procédé selon l'une quelconque des revendications précédentes,
dans lequel au moins l'une des premières informations de commande (21 ; 31 ; 301 ; 501 ; 601 ; 701) et des deuxièmes informations de commande (22 ; 32 ; 302 ; 502 ; 602 ; 702) comprend une assignation de puissance de transmission.

6. Procédé selon la revendication 5,
dans lequel les premières informations de commande (21 ; 31 ; 301 ; 501 ; 601 ; 701) assignent une première puissance de transmission au dispositif radio (10-A ; 1000) et les deuxièmes informations de commande (22 ; 32 ; 302 ; 502 ; 602 ; 702) assignent une deuxième puissance de transmission au dispositif radio (10-A ; 1000), et
dans lequel la première puissance de transmission est différente de la deuxième puissance de transmission.

7. Procédé selon l'une quelconque des revendications précédentes,
dans lequel au moins l'une des premières informations de commande (21 ; 31 ; 301 ; 401 ; 501 ; 601 ; 701) et des deuxièmes informations de commande (22 ; 32 ; 302 ; 402 ; 502 ; 602 ; 702) comprend une assignation de ressources de traitement fournies par le dispositif radio (10-A ; 1000).

8. Procédé selon l'une quelconque des revendications précédentes,
dans lequel ledit envoi de l'indication (23 ; 33 ; 305, 306 ; 405, 406 ; 506, 507 ; 605 ; 706, 707) du conflit est déclenché par ladite sélection du lancement de l'opération associée aux premières informations de commande (21 ; 31 ; 301 ; 401 ; 501 ; 601 ; 701) ou du lancement de l'opération associée aux deuxièmes informations de commande (22 ; 32 ; 302 ; 402 ; 502 ; 602 ; 702).

9. Procédé de commande de transmission radio, le procédé comprenant :
un dispositif (10-B ; 100-A ; 1100) envoyant des premières informations de commande (21 ; 31 ; 301 ; 401 ; 501 ; 601 ; 701) à un dispositif radio (10-A ; 1000), les premières informations de commande (21 ; 31 ; 301 ; 401 ; 501 ; 601 ; 701) comprenant un indicateur de priorité permettant au dispositif radio (10-A ; 1000) de déterminer une priorité associée aux premières informations de commande (21 ; 31 ; 301 ; 401 ; 501 ; 601 ; 701) ;
le dispositif (10-B ; 100-A ; 1100) effectuant une première opération en réponse à la détection que le dispositif radio (10-A ; 1000) a effectué une opération associée aux premières informations de commande (21 ; 31 ; 301 ; 401 ; 501 ; 601 ; 701) ; et
le dispositif (10-B ; 100-A ; 1100) effectuant une deuxième opération en réponse à la réception d'une indication (23 ; 33 ; 305, 306 ; 405, 406 ; 506, 507 ; 605 ; 706, 707) d'un conflit de l'opération associée aux premières informations de commande (21 ; 31 ; 301 ; 401 ; 501 ; 601 ; 701) et d'une opération associée aux deuxièmes informations de commande (22 ; 32 ; 302 ; 402 ; 502 ; 602 ; 702) reçues par le dispositif radio (10-A ; 1000) en provenance d'un autre dispositif (100-B ; 1100).

10. Procédé selon la revendication 9,
dans lequel l'indication (23 ; 33 ; 305, 306 ; 405, 406 ; 506, 507 ; 605 ; 706, 707) du conflit indique en outre une sélection par le dispositif radio (10-A ; 1000) entre le lancement de l'opération associée aux premières informations de commande (21 ; 31 ; 301 ; 401 ; 501 ; 601 ; 701) et le lancement de l'opération associée aux deuxièmes informations de commande (22 ; 32 ; 302 ; 402 ; 502 ; 602 ; 702).

11. Procédé selon la revendication 9 ou 10,
dans lequel les premières informations de commande (21 ; 31 ; 301 ; 401 ; 501 ; 601 ; 701) comprennent une assignation de ressources radio.

12. Procédé selon la revendication 11,
dans lequel la deuxième opération comprend une réassignation de ressources radio assignées par les premières informations de commande (21 ; 31 ; 301 ; 401 ; 501 ; 601 ; 701).

13. Procédé selon l'une quelconque des revendications 9 à 12,
dans lequel les premières informations de commande (21 ; 31 ; 301 ; 401 ; 501 ; 601 ; 701) comprennent une assignation de puissance de transmission.

14. Procédé selon l'une quelconque des revendications 9 à 13,
dans lequel les premières informations de commande (21 ; 31 ; 301 ; 401 ; 501 ; 601 ; 701) comprennent une assignation de ressources de traitement fournies par le dispositif radio (10-A ; 1000).

15. Procédé selon la revendication 14,
dans lequel la deuxième opération comprend une réassignation des ressources de traitement assignées par les premières informations de commande (21 ; 31 ; 301 ; 401 ; 501 ; 601 ; 701).

16. Dispositif radio (10-A ; 1000), le dispositif radio (10-A ; 1000) étant configuré pour effectuer :
- la réception de premières informations de commande (21 ; 31 ; 301 ; 401 ; 501 ; 601 ; 701) en provenance d'un dispositif (10-B ; 100-A ; 1100) ;
- la réception de deuxièmes informations de commande (22 ; 32 ; 302 ; 402 ; 502 ; 602 ; 702) en provenance d'un autre dispositif (100-B ; 1100) ;
- en fonction d'au moins l'un d'un premier indicateur de priorité dans les premières informations de commande (21 ; 31 ; 301 ; 401 ; 501 ; 601 ; 701) et d'un deuxième indicateur de priorité dans les deuxièmes informations de commande (22 ; 32 ; 302 ; 402 ; 502 ; 602 ; 702), la détermination, par le dispositif radio (10-A ; 1000), d'une priorité assignée aux premières informations de commande et/ou d'une priorité assignée aux deuxièmes informations de commande (22 ; 32 ; 302 ; 402 ; 502 ; 602 ; 702) ; et
- en réponse à une détection d'un conflit d'une opération associée aux premières informations de commande (21 ; 31 ; 301 ; 401 ; 501 ; 601 ; 701) et d'une opération associée aux deuxièmes informations de commande (22 ; 32 ; 302 ; 402 ; 502 ; 602 ; 702) :
- sur la base d'au moins l'une de la priorité assignée aux premières informations de commande (21 ; 31 ; 301 ; 401 ; 501 ; 601 ; 701) et de la priorité assignée aux deuxièmes informations de commande (22 ; 32 ; 302 ; 402 ; 502 ; 602 ; 702), la sélection entre le lancement de l'opération associée aux premières informations de commande (21 ; 31 ; 301 ; 401 ; 501 ; 601 ; 701) et le lancement de l'opération associée aux deuxièmes informations de commande (22 ; 32 ; 302 ; 402 ; 502 ; 602 ; 702) ; et
- l'envoi d'une indication (23 ; 33 ; 305, 306 ; 405, 406 ; 506, 507 ; 605 ; 706, 707) du conflit à l'au moins un du dispositif (10-B ; 100-A ; 1100) et de l'autre dispositif (100-B ; 1100).

17. Dispositif radio selon la revendication 16,
dans lequel le dispositif radio (10-A ; 1000) est configuré pour effectuer les étapes d'un procédé selon l'une quelconque des revendications 2 à 8.

18. Dispositif (10-B ; 100-A ; 1100) pour commander un dispositif radio (10-A ; 1000), le dispositif (10-B ; 100-A ; 1100) étant configuré pour effectuer :
- l'envoi de premières informations de commande (21 ; 31 ; 301 ; 401 ; 501 ; 601 ; 701) au dispositif radio (10-A ; 1000), les premières informations de commande (21 ; 31 ; 301 ; 401 ; 501 ; 601 ; 701) comprenant un indicateur de priorité permettant au dispositif radio (10-A ; 1000) de déterminer une priorité associée aux premières informations de commande (21 ; 31 ; 301 ; 401 ; 501 ; 601 ; 701) ;
- l'exécution d'une première opération en réponse à la détection que le dispositif radio (10-A ; 1000) a effectué une opération associée aux premières informations de commande (21 ; 31 ; 301 ; 401 ; 501 ; 601 ; 701) ; et
- l'exécution d'une deuxième opération en réponse à la réception, en provenance du dispositif radio (10-A ; 1000), d'une indication (23 ; 33 ; 305, 306 ; 405, 406 ; 506, 507 ; 605 ; 706, 707) d'un conflit de l'opération associée aux premières informations de commande (21 ; 31 ; 301 ; 401 ; 501 ; 601 ; 701) et d'une opération associée à des deuxièmes informations de commande (22 ; 32 ; 302 ; 402 ; 502 ; 602 ; 702) reçues par le dispositif radio (10-A ; 1000) en provenance d'un autre dispositif (100-B ; 1100).

19. Dispositif (10-B ; 100-A ; 1100) selon la revendication 18,
dans lequel le dispositif (10-B ; 100-A ; 1100) est configuré pour effectuer les étapes d'un procédé selon l'une quelconque des revendications 10 à 15.

20. Programme informatique comprenant un code de programme à exécuter par au moins un processeur (1050) d'un dispositif radio (10-A ; 1000), dans lequel l'exécution du code de programme par l'au moins un processeur (1050) amène le dispositif radio (10-A ; 1000) à effectuer des étapes d'un procédé selon l'une quelconque des revendications 1 à 8.

21. Programme informatique comprenant un code de programme à exécuter par au moins un processeur (1150) d'un dispositif (10-B ; 100-A ; 1100) pour commander un dispositif radio (10-A ; 1000), dans lequel l'exécution du code de programme par l'au moins un processeur (1050) amène le dispositif (10-B ; 100-A ; 1100) à effectuer des étapes d'un procédé selon l'une quelconque des revendications 9 à 15.
